(19) Europäisches Patentamt
European Patent Office
Office européen des brevets

(11) EP 2 228 735 A2

(12) EUROPEAN PATENT APPLICATION

(43) Date of publication:
15.09.2010 Bulletin 2010/37

(51) Int Cl.:
*G06F 17/30* (2006.01)    *G06F 21/00* (2006.01)

(21) Application number: 10002568.3

(22) Date of filing: 11.03.2010

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA ME RS

(30) Priority: 12.03.2009  IL 19757909

(71) Applicant: Deutsche Telekom AG
53113 Bonn (DE)

(72) Inventors:
• Kisilevich, Slava
  Beer Sheva
  84454 (IL)

• Rokach, Lior
  Omer
  84965 (IL)
• Elovici, Yuval
  Moshav Arugot
  79864 (IL)
• Shapira, Bracha
  Beer-Sheva
  84728 Israel (DE)

(74) Representative: Flaccus, Rolf-Dieter
Flaccus · Müller-Wolff
Patentanwälte
Bussardweg 10
50389 Wesseling (DE)

(54) **Efficient multi-dimensional suppression for k-anonymity**

(57) The invention is a computer implemented method of generating a K-anonymous dataset from the data in one or more original non anonymous data sets and a system for carrying out the method. The method automatically induces a classification tree and then executes a k-anonymity process over the classification tree. The k-anonymity process is adapted to execute different pruning processes for each of the paths from a specific node to two or more leaves. Information can be extracted from the k-anonymous dataset by external users utilizing any data mining algorithm.

EP 2 228 735 A2

Fig. 16

## Description

## Field of the Invention

The invention is related to the field of knowledge discovery in databases. Specifically the invention relates to methods of preserving the privacy of data relating to specific users. More specifically the invention relates to methods of transforming a non anonymous dataset into a k-anonymity data set.

## Background of the Invention

Publications and other reference materials referred to herein, including reference cited therein, are incorporated herein by reference in their entirety and are numerically referenced in the following text and respectively grouped in the appended Bibliography which immediately precedes the claims.

Knowledge Discovery in Databases (KDD) is the process of identifying valid, novel, useful, and understandable patterns from large datasets. Data Mining (DM) is the core of the KDD process, involving algorithms that explore the data, develop models, and discover significant patterns. Data mining has emerged as a key tool for a wide variety of applications, ranging from national security to market analysis. Many of these applications involve mining data that include private and sensitive information about users [1]. For instance, medical research might be conducted by applying data-mining algorithms on patient medical records to identify disease patterns. A common practice is to de-identify data before releasing it and applying a data-mining process in order to preserve the privacy of users. However, private information about users might be exposed when linking de-identified data with external public sources. For example, identity of a 95 year old patient may be inferred from de-identified data that include the patients' addresses, if she is known as the only patient of this age in her neighborhood. This is true even if sensitive details such as her social security number, her name, and the name of the street where she lives, were omitted.

To avoid such situations privacy regulations have been promulgated in many countries, e.g., privacy regulation as part of Health Insurance Portability and Accountability Act (HIPAA) in the USA. The data owner is required to omit identifying data in order to assure, with high probability, that private information about individuals cannot be inferred from the dataset that is released for analysis or sent to another data owner. At the same time, omitting important fields from datasets, such as age in a medical domain, might reduce the accuracy of the model derived from the data by the DM process. Researchers have shown that the HIPAA privacy rules have affected significantly their ability to perform retrospective, chart-based research [2], [3].

Privacy Preserving Data Mining (PPDM) is a relatively new research area that aims to prevent the violation of privacy that might result from data-mining operations on datasets [1][15][16][17]. PPDM deals with the tradeoff between the effectiveness of the mining process and privacy of the subjects, aiming at minimizing the privacy exposure with minimal effect on mining results.

PPDM algorithms modify original datasets so that privacy is preserved even after the mining process is activated, while minimally affecting the quality of the mining results. Verykios et al. [15] classified existing PPDM approaches based on five dimensions: 1) data distribution, referring to whether the data is centralized or distributed; 2) data modification, referring to the modifications performed on the data values to ensure privacy. There are different possible operations such as aggregation (also called generalization) or swapping; 3) data mining algorithms referring to the target DM algorithm for which the PPDM method is defined, e.g., classification [13][18]; 4) data or rule hiding referring to whether the PPDM method hides the raw or the aggregated data; and, finally, 5) privacy preservation, referring to the type of technique that is used for privacy preservation: heuristic [19], cryptography [17][18]; or reconstruction-based. i.e., perturbing the data and reconstructing the distributions to perform mining [20][21].

One of the PPDM techniques is k-anonymity. k-anonymity is an anonymizing approach proposed by Samarati and Sweeney [4]. A dataset complies with k-anonymity protection if each individual's record stored in the released dataset cannot be distinguished from at least k-1 individuals whose data also appears in the dataset. This protection guarantees that the probability of identifying an individual based on the released data in the dataset or by linking databases does not exceed 1/k. Generalization and suppression are the most common methods used for de-identification of the data in k-anonymity based algorithms [5] [6] [7] [8].

Generalization is the most common method used for de-identification of the data in k-anonymity-based algorithms [5] [7] [13] [19] [22] [23] [24]. Generalization consists of replacing specific data with a more general value, i.e. substituting attribute values with semantically consistent but less precise values, to prevent individual identification; for example the address that include (Street, City, State) can be replaced by (City, State) or the month of birth can be replaced by the year of birth, which applies to more records so that identification of a specific individual is more difficult. Generalization maintains the correctness of the data at the record level but results in less specific information that may affect the accuracy of machine learning algorithms applied on the k-anonymous dataset. Different systems use various methods for selecting the attributes and records for generalization as well as the generalization technique [9].

Some known generalization-based k-anonymity algorithms that guarantee optimal anonymity in respect of accurately enumerating all candidate generalizations are impractical [25][26]. Some other systems employ heuristic-based practical algorithms, most often using greedy algorithms in order to select attributes/value-tuples to generalize [19][27][28]. For example, the Datafly system generates frequency lists of attributes and values [29] and generalizes the attribute having the highest number of distinct values. Generalization continues until there remain k or fewer tuples having distinct values. The $\mu$-Argus system is another example of a greedy approach that generalizes attributes whose combinations with other attributes do not appear at least *k* times.

Suppression refers to removing a certain attribute value and replacing occurrences of the value with a special value "?", indicating that any value can be placed instead. Suppression can drastically reduce the quality of the data if not properly used [6]. This is the reason why most k-anonymity- related studies have focused on generalization.

The above-mentioned systems do not consider any specific DM algorithm to be operated on the datasets. A few other studies address the same problem, namely, k-anonymity for classification [11][22]. In one work [10] a random genetic algorithm is used to search for the optimal generalization of data. This algorithm seems to be impractical due to its computational extensiveness. The author reported an 18 hours run for 30k records. Wang et al. [8] presented a practical effective bottom-up generalization that aimed at preserving the information needed for inducing the classifier while preserving privacy. They defined the "information gain" metric to measure the privacy/information tradeoff. The bottom-up generalization technique can generalize only for categorical attributes. Fung et al. [7] presented another practical generalization method for classification using k-anonymity: "the top-down specialization (TDS)" algorithm. This algorithm handles both categorical and continuous attributes. TDS starts from the most general state of the table and specializes it by assigning specific values to attributes until violation of the anonymity may occur. More recently Fung et al. [11] presented an improved version of TDS which is called "TDR" (Top-Down Refinement). In addition to the capabilities of TDS, TDR is capable of suppressing a categorical attribute with no taxonomy tree. They use a single-dimension recoding [13], i.e., an aggressive suppression operator that suppresses a certain value in all records without considering values of other attributes so that data that might adhere to k-anonymity might be also suppressed. This "over-suppression" reduces the quality of the anonymous datasets.

Friedman et al. [13] present kADET, a decision tree induction algorithm that is guaranteed to maintain k-anonymity. The main idea is to embed the k-anonymity constraint into the groining phase of a decision tree. While kADET has shown accuracy superior to that of other methods, it is limited to decision tree inducers. It differs from other methods such as TDS and TDR by letting the data owners share with each other the classification models extracted from their own private datasets, rather than to let the data owners publish any of their own private datasets. Thus, the output of kADET is an anonymous decision tree rather than an anonymous dataset.

*Quasi-identifier* is a set of features whose associated values may be useful for linking with another dataset to re-identify the entity that is the subject of the data [6]. One major drawback of existing generalization techniques is that manually generated domain hierarchy trees are required for every quasi-identifier attribute of datasets before k-anonymity can be applied [8][7][10][11][12][13]. This disadvantage is common to all existing anonymization algorithms (except TDR with some reservations) and requires performing manual pre-processing, i.e., generation of a domain generalization taxonomy to define the hierarchy of the categorical attribute values involving prior knowledge about the domain. The domain tree should be prepared separately for every domain. Moreover, there might be disagreements between domain experts about the correct structure of the taxonomy tree, which may lead to differences in the results. The TDR algorithm is the only study (to the best of the knowledge of the inventors of the present invention) that relaxes the need for a taxonomy tree only for categorical attributes by using a single-dimension suppression operator for attributes for which domain taxonomy does not exist. As explained above, the performance of a single-dimension suppression operator is quite limited. Because it suppresses a certain value in all tuples without considering values of other attributes. This "over-suppression" may lead to unnecessary loss of data.

It is a purpose of the present invention to provide a practical and effective approach to knowledge discovery in databases that provides an improved predictive performance when comparing to existing approaches.

It is another purpose of the present invention to provide a practical and effective approach to knowledge discovery in databases that does not require the generation of manual domain generalization taxonomy.

It is another purpose of the present invention to provide a practical and effective approach to knowledge discovery in databases that uses a classification tree that is automatically induced from the original dataset in order to perform a multi-dimensional suppression having a performance comparable to that of generalization-based algorithms.

It is another purpose of the present invention to provide a practical and effective approach to knowledge discovery in databases that uses multi-dimensional recoding, i.e., suppression of values is applied only on certain tuples, depending on other attribute values.

Further purposes and advantages of this invention will appear as the description proceeds.

## Summary of the Invention

In a first aspect the invention is a computer implemented method of generating a K-anonymous dataset from the data in one or more original non anonymous datasets. The method of the invention comprises two phases The first phase comprises the steps of:

a. automatically inducing a Classification Tree (CT) from the one or more original non anonymous datasets over the projection of a quasi-identifier set of features; and
b. calculating an instance size associated with exactly one path from root to leaf, for each leaf.

The second phase comprises the steps of:

c. choosing an internal node from the CT of height=1 and checking whether its instance size complies with K; wherein

I. if the instance size of the internal node complies with K, it is moved to an accumulating buffer for generating the K-anonymous dataset;
II. if the instance size of the internal node does not complies with K, checking whether the total number of instances associated with the non-complying leaves jointly complies with K; wherein

i. if the non-complying leaves jointly comply with K, complementing non-complying instances with instances of complying siblings to reach K;
ii. if the non-complying leaves jointly do not comply with K, no instances are mounted to the accumulating buffer, and the node is completely pruned; and

d. performing step c as long as there are nodes in the CT.

Embodiments of the invention further comprise using a data mining algorithm over the k-anonymous dataset. The data mining algorithm can be a classification mining algorithm.
In a second aspect the invention is a system for generating a k-anonymous dataset from the data in an original non anonymous dataset. The k-anonymous dataset can be used by external users utilizing any mining algorithm for extracting information from the k-anonymous dataset.
The system of the invention comprises:

a. A Classification Tree Inducer (CTI) module which is used to automatically induce a Classification Tree (CT) from the original non anonymous dataset.
b. A quasi-identifier set of features, whose associated values can be used to identify a specific entity whose features are part of the original non anonymous dataset. The quasi-identifier set of features is used for training the Classification Tree.
c. An anonymizing module adapted to receive an anonymity threshold level (K) and to execute a k-anonymity process over the Classification Tree. The k-anonymity process is adapted to execute different pruning processes for each of the paths from a specific node to two or more leaves.
d. An accumulating buffer for accumulating the output of the anonymizing module for generating the k-anonymous dataset.

In one embodiment the invention is adapted such that the pruning process retains paths that comply with k-anonymity before pruning in their original form, while non-complying paths are pruned in order to try to make them comply with k-anonymity.
The pruning process can be further carried out by complementing instances of non-complying leaves with instances from their complying siblings.
All the above and other characteristics and advantages of the invention will be further understood through the following illustrative and non-limitative description of embodiments thereof, with reference to the appended drawings. In the drawings the same numerals are sometimes used to indicate the same elements in different drawings.

## Brief Description of the Drawings

- Fig. 1 and Fig. 2 present examples of records in the Adult dataset from the UC Irvine Machine Learning Repository;

- Fig. 3 to Fig. 6 illustrate an example of the pruning of a classification tree according to the invention;
- Fig. 7 presents the kACTUS algorithm of the invention;
- Fig. 8 presents the new suppression function obtained from Fig. 7 by relaxing the assumption that the quasi-identifier includes only categorical attributes;
- Fig. 9 is a graphic representation of the experimental process that was conducted in order to evaluate the performance of the method of the invention;
- Fig. 10 shows Table 1, which summarizes the properties of the datasets used in the experimental process of Fig. 9;
- Fig. 11 shows Table 2, which lists the accuracy results obtained by the algorithm of the invention on six different values of k for various datasets using different inducers;
- Fig. 12 shows Table 3, which specifies the results obtained on the Adult dataset for comparing the algorithm of the invention with TDS, TDR and kADET, respectively;
- Fig. 13 shows Table 4, which presents the accuracy results obtained when comparing the predictive performance of kACTUS to the Mondrian algorithm;
- Fig. 14 shows Table 5, which presents the results of comparison of the algorithm of the invention with suppression methods;
- Fig. 15 shows Table 6, which presents the running time in an experiment designed to measure the computational cost of the algorithm of the invention;
- Fig. 16 schematically illustrates the modules of the system which executes the kACTUS algorithm; and
- Fig. 17 is a flow chart presenting the method for generating a K-anonymous dataset.

## Detailed Description of Embodiments of the Invention

The present invention provides a practical and effective approach to knowledge discovery in databases. It is related to Privacy Preserving Data Mining (PPDM) and can be classified according to the dimensions proposed by Verykios et al. [15] that have been described herein above in the background section of this application. The invention deals with centralized databases (dimension 1), on which suppression of the data (dimension 2) is performed. The DM algorithm that this invention targets is classification (dimension 3), and part of the raw data is hidden (dimension 4). The k-anonymity method, which is a heuristic-based technique, is used (dimension 5).

In contrast to prior art k-anonymity PPDM techniques systems that do not consider any specific DM algorithm to be operated on the datasets, the method of the invention considers the anonymity problems in terms of classification, i.e., the operations on the data are performed while taking into account their effect on classification results. The invention, named herein k-Anonymity of Classification Trees Using Suppression (kACTUS) is a method for achieving k-anonymity. kACTUS is a supervised decision tree-based k-anonymity.

The basis of the invention is a new algorithm that de-identifies (anonymizes) datasets to assure a high degree of users' privacy when data-mining is applied, while having minimal impact on the accuracy of the data-mining results. The privacy of the users is measured by the compliant of the dataset to k-anonymity. kACTUS is specifically designed to support classification, but can be extended to support other data-mining methods.

kACTUS, wraps a decision tree inducer which is used to induce a classification tree from the original non anonymous dataset. The wrapping approach [14] refers to using a known algorithm as a black box, so that only knowledge of the interface is needed. While the wrapping approach has been used in other domains (such as feature selection), it has not been used for anonymizing datasets, and presents important advantages for this application. The wrapping approach enables utilization of existing state-of-the-art practice in generating accurate classifiers to generate anonymised datasets with minimal effect on the accuracy. Another advantage of the wrapping approach is that it does not require any revision of existing algorithms for adjusting it to k-anonymity.

The automatically induced tree is used by kACTUS to apply k-anonymity on the dataset instead of using a manual generated domain generalization tree. kACTUS generates a k-anonymous dataset that can be used by external users that may utilize any mining algorithm for training a classifier over the anonymous dataset. The output of the algorithm is an anonymous dataset which can be transmitted to the data consumers for further mining. The kACTUS algorithm takes the suppression approach to anonymize the dataset. An efficient multi-dimensional suppression method has been developed, where values are suppressed only on certain tuples, depending on other attribute values. It will be shown herein below that the multi-dimensional suppression scheme of the invention significantly outperforms existing single-dimensional methods and existing multi-dimensional generalization methods that require manually defined generalization trees.

Several basic definitions to be used herein below are now introduced and the problem formulation is presented.

In a typical classification problem, a training set of labeled examples is given. The training set can be described in a variety of languages, most frequently, as a collection of records that may contain duplicates (also known as a bag). A vector of attribute values describes each record. The notation A denotes the set of input attributes containing n attributes $a_i$: $A = \{a_1,...,a_i,...,a_n\}$ The notation $y$ represents the class variable or the target attribute. Attributes (sometimes referred to as features) are typically one of two types: categorical (whose values are members of a given set), or numeric (whose values are real numbers). When the attribute $a_i$ is categorical, it is useful to denote its domain values by $dom(a_i)$. Numeric attributes have infinite cardinalities.

The instance space X (the set of all possible examples) is defined as a Cartesian product of all the input attribute domains: $X = dom(a_1) \times dom(a_2) \times ... \times dom(a_n)$. The universal instance space (or the labeled instance space) $U$ is defined as a Cartesian product of all input attribute domains and the target attribute domain, i.e., $U = X \times dom(y)$. The training set consists of a set of m records and is denoted as $S=(<x_1, y_1>,...,<x_m, y_m>)$ where $\boldsymbol{x}_q \in X$. Usually, the training set records are distributed randomly and independently according to some fixed and unknown joint probability distribution $D$ over $U$.

It is assumed that a given inducer $I$ is used to build a classifier (also known as a classification model) by learning from $S$. The classifier can then be used for classifying unlabelled instances. The notation $I(S)$ represents a classifier which was induced by training $I$ with dataset $S$.

Next the common operation notation of bag algebra (i.e., duplicates are allowed) is adopted to present projection and selection of tuples [31], where S denotes a bag.

1. Selection: The selection operator σ with the form $\sigma_p(S)$ is used to select tuples in S that satisfy a given predicate p.

2. Projection: The projection operator π with the form $\pi_B(S)$ is used to project bag S onto a subset of features B.

3. Duplicate Elimination in Bags: The duplicate elimination operator ε with the form $\varepsilon(S)$ creates bag containing exactly one occurrence of each object of S. [Note that in SQL this operation is known as the **DISTINCT** clause which is used together with the SQL SELECT keyword, to return a dataset with unique entries for certain database table column.]

4. Update operator: The update operator δ with the form $\delta_{a \rightarrow w}(S)$ where S is a bag with an attribute $a$, which is assigned the value of expression w.

Given a population of entities $E$, an entity-specific table $S \in U$ with input feature set $A=\{a_1, a_2,..., a_n\}$, $f_1: E \rightarrow S$ and $f_2: S \rightarrow E'$ where $E \subseteq E'$. $Q$ is *quasi-identifier* of $S$, if $Q \subseteq A$ and $\exists e \in E$; such that $f_2(\pi_Q f_1(e))=e$.

The formulation defines a *quasi-identifier* as a set of features whose associated values may be useful for linking to re-identify the entity that is the subject of the data [6].

A dataset $S$ and the quasi-identifier $Q$ associated with it is said to satisfy *k-anonymity* if and only if each tuple in $\varepsilon(\pi_Q(S))$ appears with at least k occurrences in $\pi_Q(S)$.

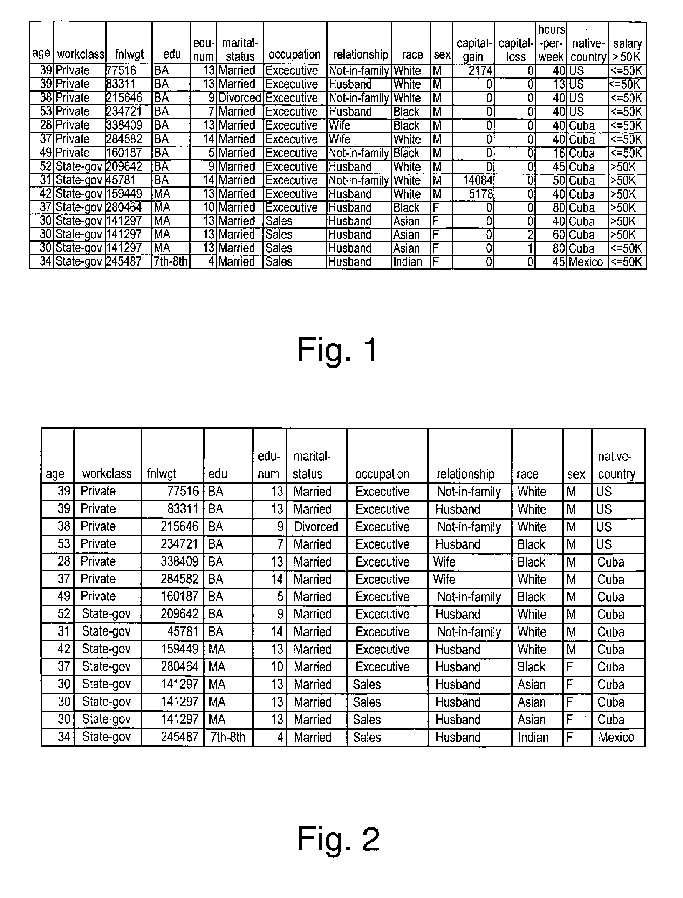

The Adult dataset from the UC Irvine Machine Learning Repository contains census data and has become a commonly used benchmark for k-anonymity. The Adult dataset has 6 continuous attributes and 8 categorical attributes. The class attribute is income level, with two possible values, <=50K or >50K. In this dataset Q=*(age, workclass, fnlwgt, edu, edu-nun, marital-status, occupation, relationship, race, sex, native-country)* is a quasi-identifier since the values of these attributes can be linked to identify an individual. As in prior art PPDM studies, the method of the invention assumes that the set of quasi-identifiers is provided by the user, and that there is only one set of quasi-identifiers. Examples of several records in the Adult dataset are presented in Fig. 1 and Fig. 2.

For example, assume k=2. The dataset described in Fig. 1 does not satisfy k-anonymity requirements for Q= (age, workclass, fnlwgt, edu, edu-nun, marital-status, occupation, relationship, race, sex, native-country), since $\pi_Q(R)$ results in 15 records (see Fig. 2). The records 12 to 14 comply with the k-anonymity restriction because they are three records with the same values for the quasi-identifiers (k=2<3). However, the remaining records are unique, and thus do not comply with the k-anonymity restriction (k=2>1).

The main goal of the invention is to introduce a new k-anonymity algorithm which is capable of transforming a non anonymous dataset into a k-anonymity dataset. The transformation is aimed to achieve a predictive performance of a classifier trained on the transformed dataset that is as similar as possible to the performance of a classifier trained on the original dataset. Consequently the problem can be formally phrased as follows: Given $k \in [1,m]$, an inducer $I$, a dataset $S$ with input attribute set $A = \{a_1, a_2,..., a_n\}$ and target feature $y$ from a distribution $D$ over the labeled instance space, the goal of the invention is to find an optimal transformation $T: S \rightarrow S'$ such that $S'$ satisfy k-anonymity. Optimality is defined in terms of minimizing the deterioration in the generalized accuracy over the distribution $D$ as a result of replacing classifier $I(S)$ with classifier $I(S')$.

Finding the optimal solution for Multidimensional k-Anonymity is known to be NP-Hard [32]. The method of the invention aims at defining a new k-anonymity heuristics that is not based on a predefined generalization in order to overcome the need to generate manually domain hierarchy trees for every quasi-identifier attribute since the manual process entails prior specific knowledge for each domain.

The method of the invention for k-anonymity is now discussed. Consideration must be given to how the input attributes affect the target attributes (class) in order to achieve the goal of the invention, i.e. to create an anonymous dataset where the predictive performance of a classifier trained on the anonymous dataset is as similar as possible to the performance of a classifier trained on the original dataset.

It is possible to tackle this issue either as part of the anonymization algorithm or by utilizing existing classifier inducers. In this invention the second approach is taken assuming that it will be more efficient to use existing mature inducers than to try to 'invent the wheel,' especially when the aim is to create an anonymous dataset and not a classifier.

Specifically the approach taken by the inventors wraps an existing classification tree induction algorithm, e.g. C4.5, and is referred to as kACTUS (K-Anonymity of Classification Trees Using Suppression). The classification tree inducer is used to induce a classification tree from the original dataset which indicates how the attribute values affect the target class. The classification tree can be easily interpreted by a machine in order to perform the k-anonymity process.

Each path from the root to a leaf can be treated as a classification rule. A subset of the dataset is ascribed with each leaf. If this subset size is greater than k then this subset of instances can be easily anonymised by suppressing all the quasi identifier attributes that are not referenced in one of the nodes along the path from the root. Assuming that all attributes are categorical, then all quasi identifiers attributes that are referenced have the same value for all the instances of the subset and thus there is no need to suppress or generalize their values. In the terminology of the invention, a leaf node complies with the k-anonymity if the number of instances that are ascribed to this leaf is higher than or equal to k.

If all the leaves in the tree comply with the k-anonymity the dataset can be k-anonymized by suppression as described above. For leaves that do not comply with the k- anonymity, by adequately pruning them a new leaf is obtained which may comply with the k-anonymity. The fact that the order in which the attributes are selected for the decision tree usually implies their importance for predicting the class is utilized. Thus by pruning the rules in a bottom-up manner, the least significant quasi-attributes are suppressed. The remaining attributes are the quasi-attributes which will be left as-is.

## Example of pruning of a classification tree

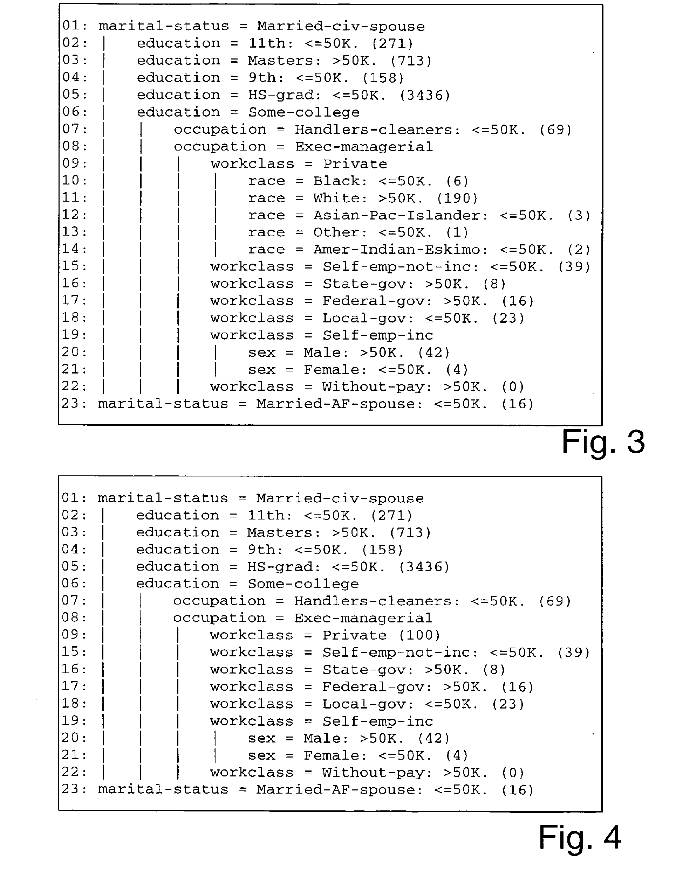

The anonymization procedure is illustrated on the Adult dataset assuming k anonymity=100 and the quasi-identifier which was described herein above in the paragraphs that presented the problem formulation First a classification tree is built using an existing classification tree algorithm. Fig. 3 describes the generated classification tree after applying the C4.5 algorithm on the quasi-identifier attributes in the Adult dataset. A number in parenthesis is associated with each leaf. This number represents the number of instances in the training set that complies with the tests along the path.

Given the classification tree, the anonymization process begins by reviewing the nodes with height=1. Nodes 9 and 19 have height = 1, thus node 9 is arbitrarily selected. Its children (nodes 10-14) are examined indicating that only node 11 complies with k (because 190>100). The remaining siblings (nodes 10,12,13,14) have 6+3+1+2=12 instances in total, i.e. there are 88 instances missing. Node 11 has 90 extra instances (190-100=90). Thus 88 instances of node 11 can be randomly selected and used to complement the nodes that do not comply. The remaining 102 instances of node 11 can be mounted as-is to the anonymous dataset with the following quasi identifiers revealed (all non quasi identifier attributes, such as hours-per-week, can be revealed as well): marital-status=Married-civ-spouse, education = Some-college, occupation = Exec-managerial, workclass = Private, race = White.

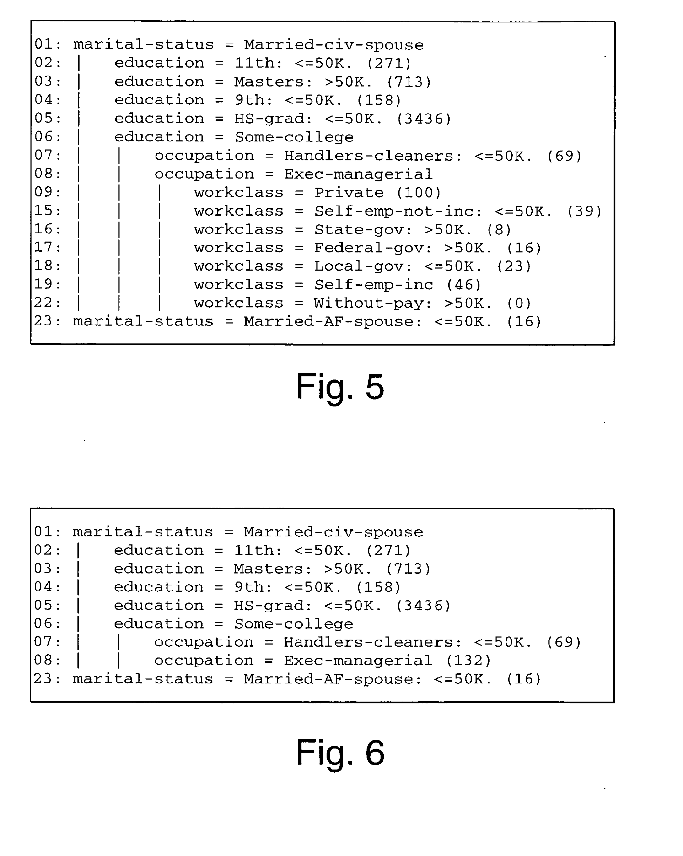

Finally the node 9 is pruned resulted in the revised tree presented in Fig 4. Given the new tree the next node to be examined is node 19. None of its sliblings of complies with *k*. Thus, no instances are mounted to the anonymised dataset, and node 19 is simply pruned with its children. This results in the tree shown in Fig 5. The next node to be examined is node 8. Only the first sibling (node 9) complies with k, thus its instances are mounted to the anonymised dataset. Node 8 is pruned and accumulates the instances of the uncomplying nodes 15-19 and 22 (total of 132 instances) as presented in Fig 6.

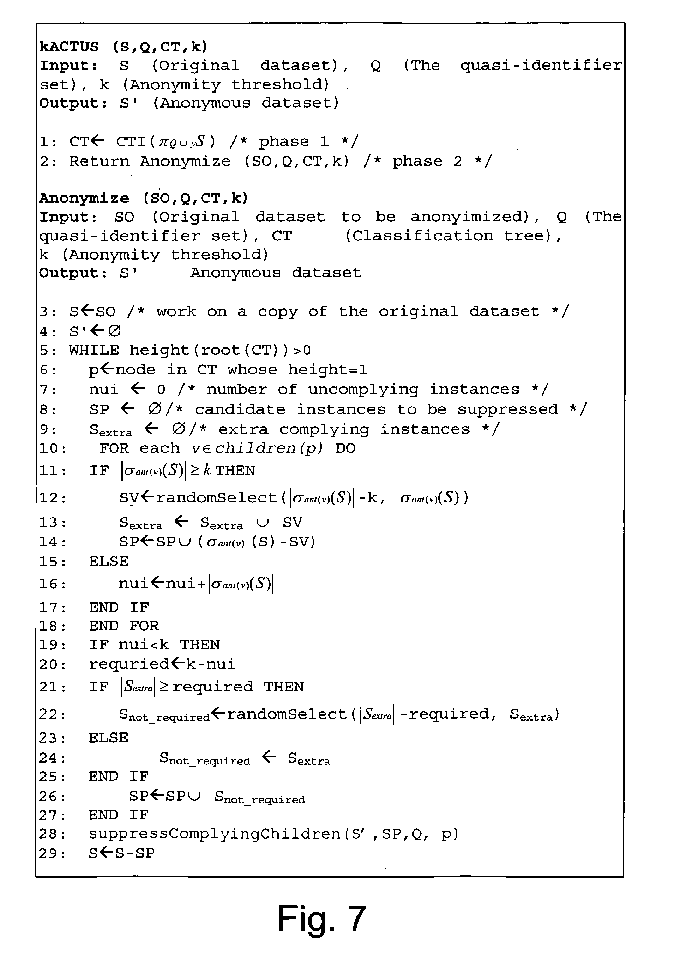

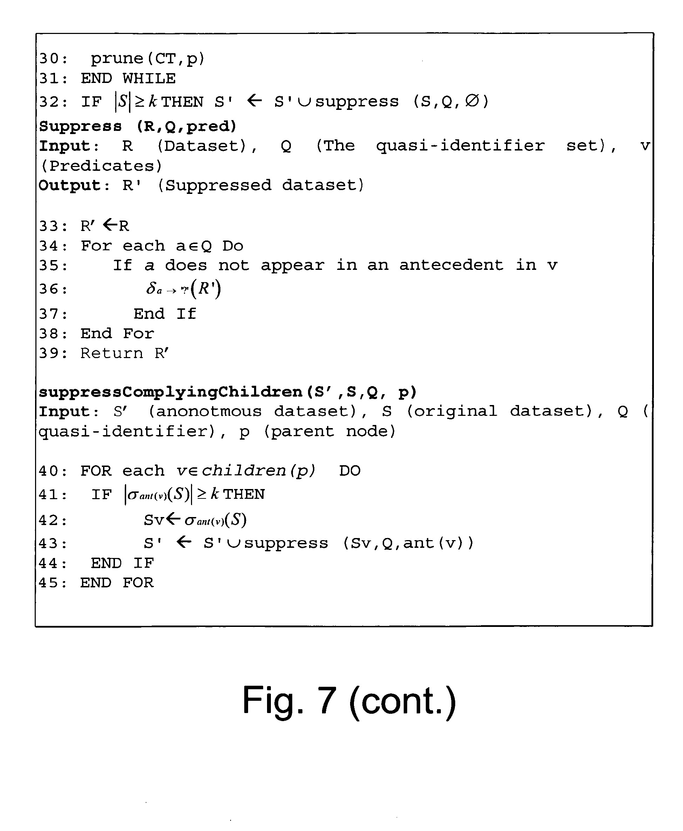

The kACTUS algorithm of the invention is presented in Fig. 7. kACTUS consists of two main phases: In the first phase, a classification tree is induced from the original dataset; in the second the classification tree is used by a new algorithm developed in this invention to k-anonymize the dataset.

In the first phase a decision tree inducer (denoted by *CTI*) is employed to generate a decision tree denoted by *CT.* The tree can be derived using various inducers. The method of the invention concentrates on top-down univariate inducers which are considered the most popular decision tree inducers [33] and include the well-known algorithm C4.5 [34]. Top-down inducers are greedy by nature and construct the decision tree in a top-down recursive manner (also known as divide and conquer). Univariate means that the internal nodes are split according to the value of a single attribute. The decision tree is trained over the projection of the quasi-identifiers i.e., $CT \leftarrow CTI(\pi_Q vy(S))$. The wrapped inducer *CTI* should be differentiated from the target inducer *I*. Inducer *I* is applied on the anonymous dataset, (i.e., after applying k-anonymization process). The aim of the *CTI* is to reveal which quasi-identifier is more relevant for predicting the class value.

Any internal node (non-leaf) with less than k instances can not be used by itself for generating the anonymous dataset. Thus, even if such a node is provided in the classification tree it can be pruned in advance. In many decision tree inducers, such as C4.5, the user can control the tree growing process by setting the algorithm's parameters. Specifically the parameter MinObj ("minimum number of instances") indicates the number of instances that should be associated with a node in order for it to be considered for splitting. By setting MinObj to *k*, one ensures that there are no non-complying internal-nodes that need to be pruned. Thus with this parameter setting the tree size can be reduced without sacrificing the accuracy performance of the k-anonymous procedure. Nonetheless in Phase 2 described next no assumption regarding the internal nodes is made.

It is assumed that the classification tree complies with the following properties:

1. The classification tree is univariate, i.e. each internal node in the tree refers to exactly one attribute.
2. All internal nodes refer to a quasi-identifier attributes. This is true because the decision tree was trained over the projection of the quasi-identifier set $(\pi_{Q \cup y}(S))$.
3. Assuming a top-down inducer, the attributes are sorted (from left to right) according to their significance for predicting the class (where the right-most relates to the least significant attribute).
4. Complete Coverage: Each instance is associated with exactly one path from root to leaf.

In the second phase the classification tree that was created in the first phase is used by an anonymizing module to generate the anonymous dataset. In this phase these properties are utilized for the k-anonymity process. Given a tree $CT$ and node $v$, the following functions and procedures are defined. Because these functions are straightforward they are used herein without providing pseudo-code.

1. root(CT) - returns the root node of CT
2. parent(v) - returns the parent of v
3. height(v) - returns the height (length of longest path from that node to a leaf.) of v.
4. children(v) - returns the set of immediate descendants of v.
5. ant(v) - returns the antecedent associated with node v. Conjoining (logically ANDed together) the tests along the path from the root to the node form the antecedent part. For example the seventh leaf in Fig. 3 is associated with the antecedent "Marital-status=Married AND Education= Some-college AND Occupation=Handlers-cleaners"
6. prune(CT,v) - prunes all descendants of v from the tree CT
7. randomSelect (k,S) - return k randomly selected instances from relation S.

The supervised k-anonymity process of the invention is described in procedure *Anonymize* of Fig. 7. The input to the *Anonymize* procedure includes the original dataset S, quasi-identifier set Q, classification tree *CT*, and the anonymity threshold $k$. The output of the algorithm is a k-anonymous dataset denoted by $S'$. For the sake of simplicity it is first assumed that all quasi-identifiers are categorical. Later this assumption is relaxed.

As long as the tree is not fully pruned (i.e. the height of the root is greater than 0), the iterations continue. In each iteration one internal node (denoted by p) of height=1 is chosen. It is to be noted that such a node can always be found.

In lines 9-18 the children of $p$ (which are leaves as height(p)=1) are gone over and checked to see if they comply with $k$, i.e., it is verified that the number of records in the dataset satisfying the leaf antecedents is higher than or equal to $k$. The instances associated with the complying leaves form the candidate set of instances to be suppressed in this iteration (denoted by SP). The number of instances associated with the non-complying leaves are counted by the counter *nui* (line 16).

In lines 19-25 a check is carried out to determine if the total number of instances associated with the non-complying leaves jointly comply with $k$ (i.e. *nui*<$k$ ). If not an attempt to reach $k$ is made by taking instances from the complying siblings. Siblings can waive instances only if they have extra instances. For example if $k$=100 and a certain sibling has 102 instances associated with it then 2 instances can be waived. The extra instances are randomly accu-mulated in $S_{extra}$ in lines 9-17.

Finally if the extra instances can actually help to reach the threshold k (line 20), randomly selected non required instances from $S_{extra}$ are added to *SP*. This ensures that the post-pruning p, is associated with k instances (i.e. complies with k) and will be mounted to the anonymous dataset as-is in the subsequent iterations. On the other hand if the extra instances are not sufficient to make the non-complying leaves reaching the threshold k, then no instances are moved from the complying leaves to the non-complying leaves. It was decided not to move any instances, because even if all the extra instances are moved, the post-pruning $p$ will still not comply with k and it will need to be furthered pruned.

In line 28-30 the complying children are eventually suppressed, suppressed instances are removed from the dataset $S$ and $p$ is pruned. It should be noted that the algorithm of the invention is different from bottom-up pruning procedures which are usually included in advanced decision trees inducers. Contrary to these pruning procedures, the algorithm of the invention may prune every path differently. Thus, instead of pruning all branches from a certain point to the leaves, some paths remain as-is (if they comply with k-anonymity) while other are pruned. Moreover instances that are associated with the same leaf can be pruned differently, because some may be randomly chosen to help their non-complying siblings.

Finally in line 32, the process is left with the root of the tree, which is examined to see whether the number of instances left with the root node complies with k. If such a situation occurs, then these instances are suppressed and then moved to the anonymous dataset. Note that if all attributes are quasi-identifiers (i.e., Q=A), these instances are copied to the anonymous dataset, but not before suppressing all input attributes. Thus these instances are left only with the target attribute. Still some induction algorithms can benefit from these empty instances, as it provides additional information regarding the class distribution.

However, if the remaining instances do not comply with k, we do not copy these instances to the anonymous dataset. Thus it is obvious that the new anonymous dataset may contain fewer instances than the original one, but experiments carried out by the inventors show that the number of removed instances is very small compared to the total number of instances.

Some properties of the kACTUS algorithm will now be discussed: **Corollary 1:** *The kACTUS algorithm is correct*

**Proof:** In order to prove the correctness of the algorithm, it must be shown that the dataset S' complies with k-anonymity. This can be easily verified because just before calling the suppress procedure; where the k threshold is verified (line 32 and line 41).

**Corollary 2:** *The computational complexity of kACTUS algorithm overhead is lineally related to the number of instances.*

**Proof:** In order to prove this, the computational overhead incurred by the kACTUS, in addition to the complexity of the decision tree inducer *CTI* (i.e. the complexity of the Anonymize procedure) must be found.

It is assumed that the given tree structure is such that each leaf holds the pointers to the instances complying with this leaf (i.e., complying with all the tests in the corresponding path from the root to the leaf). Note that all selection operations in kACTUS are performed only on the leaves. The number of iterations is bounded by the number of internal nodes, which can not exceed the number of instances (i.e. m). On each iteration of the outer loop a single node is handled. The number of children associated with the internal node is maximum $d_{max}$, which represent the largest attribute domain. Regarding the operations on the instances:

1. Summing up all instances suppression, in the worst case the maximum instances that are manipulated is m, each with $|Q|$ suppressions and $|A|$-$|Q|$ values duplications. Thus the suppression operations end up with O(m $|A|$).
2. Each instance with $|A|$ attributes is added to an existing bag (line 13, line 14 and line 26) not more than $|Q|$ times. Note that the longest path is bounded by $|Q|$ because the tree is using only the quasi identifiers. Moreover some instances may left the next tree level. This totally ends up with O(m$|A|$ $|Q|$).
3. As for the expensive minus operations - actually there is no need to explicitly perform them. Lines 11-13 can be joined by shuffling the bag's instances and add the top $|\sigma_{ant(v)}(S)|$-k instances to $S_{extra}$ and the remaining to *SP*. Line 28 can be relaxed by adding the instances of the non-complying leaves and the remaining extra required instances of the complying leaves and associating them to the new leaf (note that the pruned parent become a leaf). Thus the minus operations also end up with O(m $|A|$ $|Q|$).
4.

In summary the complexity of kACTUS overhead is:

$$O\left(m \cdot d_{\max}\right) + O(\mathrm{m} \, |A|) + O(\mathrm{m} \, |A| \, |Q|) + O(\mathrm{m} \, |A| \, |Q|) = O\left(m \cdot \max\left(d_{\max}, |A| |Q|\right)\right).$$

Practically, the computational complexity is affected by the size of *k*. For a large number of k more inner iterations are needed until the rule complies with k. However, k could not be compactly referred to in the complexity analysis without making major assumptions about the tree structure (for example assuming that the tree is balanced).

**Corollary 3:** *The number of instances that might be lost due to kACTUS is bounded by k.*

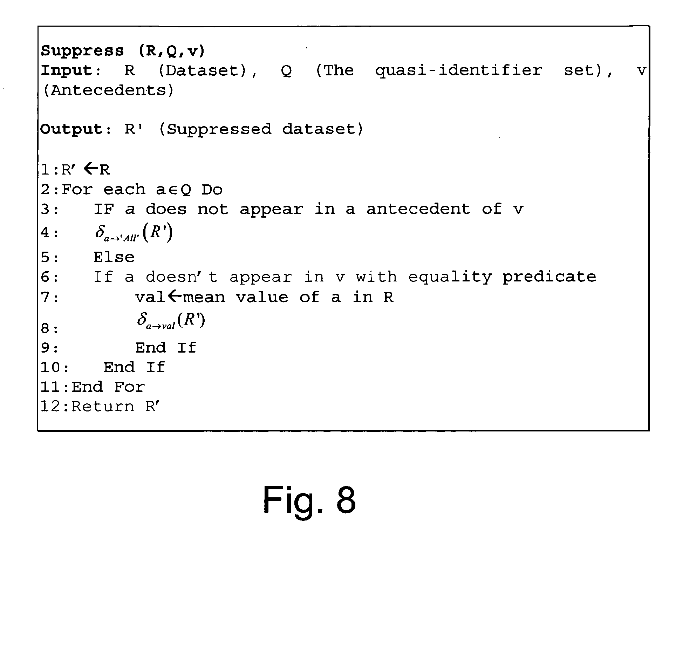

**Proof:** The proof of this corollary is straightforward. The only cause of instances loss is Line 32 in the algorithm. Instances are lost if and only if the left over subset (instances that were pruned up to the root) has less than *k* instances.
Now the assumption that the quasi-identifier includes only categorical attributes is relaxed. In order to do this, only the suppressed function in the algorithm needs to be revised. Fig. 8 presents the new suppression function. In this function if the attribute *a* is included in v but it appears with an inequality predicate (i.e., it is a numeric attribute) then all the instances of the attribute *a* in *R* are replaced with a value that is equal to the mean of all *a* values in *R*. This is illustrated with the following node path:

marital-status = Married-civ-spouse AND age >= 30 AND occupation = Exec-managerial AND age < 50 AND race = Other AND age < 40: <=50K. (5)

Note that the numeric attribute *age* appears in the rule three times. It is also assumed that k=10.

The path does not comply with *k* so it is pruned to obtain:

marital-status = Married-civ-spouse AND age >= 30 AND occupation = Exec-managerial AND age < 50 AND race = Other: <=50K. (15)

The new node complies with k (because it has 15 instances). These instances will be added to the dataset with the mean value of age which should be in the range [30,50].

Note that if there are numeric quasi-identifiers then the computational complexity of the kACTUS is not bounded by Corollary 2 because the same attribute can appear several times in the same rule (as was demonstrated in the above example). However, the experimental study described herein shows that practically the inclusion of numeric attributes has no significant effect on the computational cost.

## Experimental Evaluation

In order to evaluate the performance of the method of the invention for applying k-anonymity to a dataset used for classification tasks, a comparative experiment was conducted on benchmark datasets. Specifically, the experimental study had the following goals:

1. To compare the obtained classification accuracy to the original accuracy without applying k-anonymity,
2. To compare the proposed method to existing k-anonymity methods in terms of classification accuracy.
3. To investigate the sensitivity of the proposed method to different classification methods.

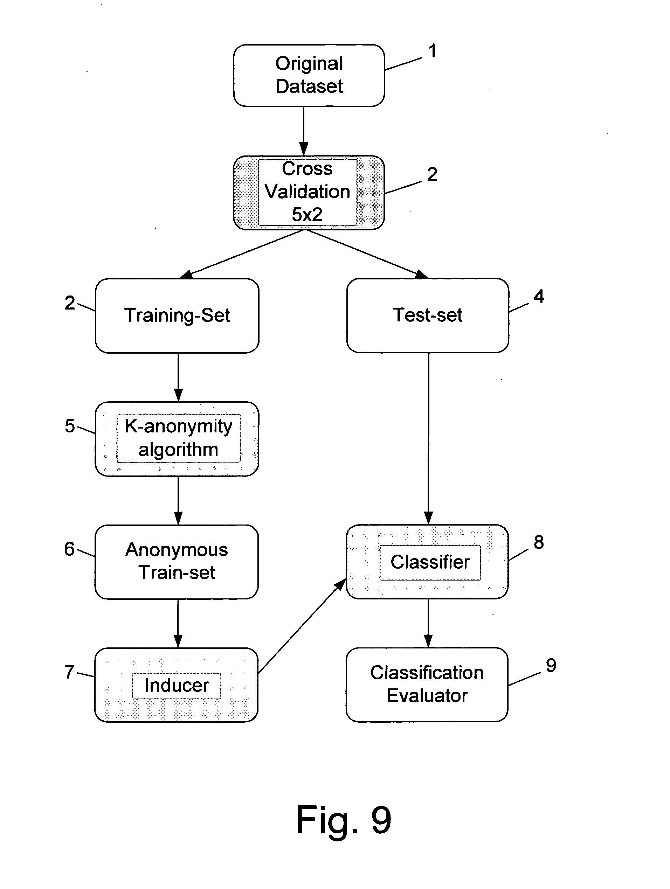

Fig. 9 is a graphic representation of the experimental process that was conducted in order to evaluate the performance of the method of the invention. In Fig. 9 unshaded boxes represent datasets. The main aim of this process is to estimate the generalized accuracy (i.e., the probability that an instance was classified correctly). First, the dataset (box 1) was divided into training (box 3) and test sets (box 4) using 5 iterations of 2-fold cross validation (box 2 - known as the 5x2CV procedure) as proposed by Alpaydin [35]. On each iteration the dataset was randomly partitioned into two equal-sized sets S1 and S2 such that the algorithm was evaluated twice: on the first evaluation S1 is the training set and S2 the test set, and vice versa the second time. The k-anonymity method was applied (box 5) on the training set and a new anonymous training set obtained (box 6). An inducer was trained (box 7) over the anonymous training set to generate a classifier (box 8). Finally, the classifier was used to estimate the performance of the algorithm over the test-set (box 9).

Note that in the kACTUS algorithm, the classifier can use the test set as-is. In kACTUS suppression is performed on the training set, i.e. some values are converted to missing values and all others left on their original values. Many of the prior art induction algorithms are capable of training from a dataset with missing values. The test set attributes uses the same domain values as in the training set. Nevertheless, TDS and TDR require fitting the test set to the classifier in order to ensure fair comparison with kACTUS. If for example the values "USA" and "Mexico" are generalized to the value "America", then all occurrences of "USA" and "Mexico" in the training dataset will be replaced with the value "America". A classifier trained on the anonymous training set will not be aware of the existence of the values "USA" and "Mexico" (note that the classifier is not aware of the generalization tree). Thus if this classifier were now used to classify a test instance with the original value of "USA", then the classifier would not be able to utilize the fact that "USA" should be treated as "America". Because kADET is embedded in the decision tree algorithm, it is capable, like kACTUS, of handling the test set as-is.

The same cross-validation folds were implemented for all algorithms compared. Since the average accuracy is a random variable, the confidence interval was estimated by using the normal approximation of the binomial distribution. Moreover, the combined 5x2 CV F-test was used to accept or reject the hypothesis that the two methods have the same error rate with a 0.95 confidence level.

It should be noted that the above experimental process is slightly different from the process used in [11]. As Friedman et al. [13] already indicated, the experiment in [11] uses the entire dataset to perform generalization and "this may provide different generalization results". In fact according to the experimental design in [11], the split into training and test sets is performed after the generalization is applied. Thus, the estimated variance of the cross validation solely measures the inducer's variance and not the anonymity variance. In the experimental design that was used herein the split is performed before generalization is applied, thus the anonymity was examined on various samples.

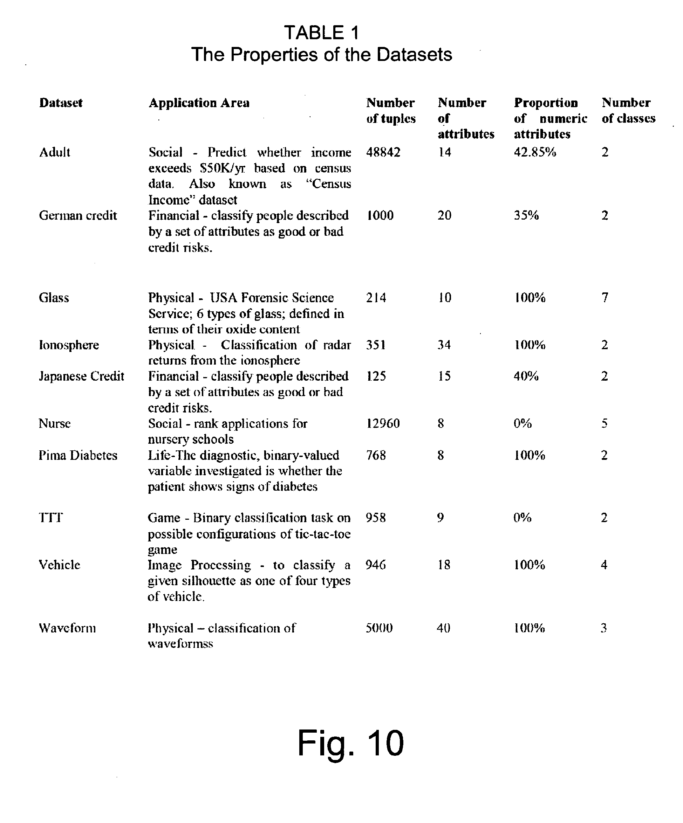

The privacy preserving classification algorithms are usually evaluated only on the Adult dataset which has become a commonly used benchmark for k-anonymity [7] [13] [22]. Fung et al. [11] also evaluated the TDR algorithm on the German credit dataset. In the experimental study described herein an additional eight datasets were used (ten datasets in total), which were also selected from the UCI Machine Learning Repository [36] and are widely used by the machine learning community for evaluating learning algorithms. The datasets vary across such dimensions as the number of target classes, of instances, of input features, and their type (nominal, numeric). Table 1, shown in Fig. 10, summarizes the properties of the datasets.

For the anonymity phase (box 5 in Fig. 9), the algorithm of the invention (denoted as kACTUS) was compared to TDS [7], TDR [11] and kADET [13] in terms of classification accuracy. All experiments were based on the execution of the original software obtained from the inventors of the corresponding algorithms.

Because TDS, TDR, and kADET all require the user to provide a generalization taxonomy, they could only be used on the Adult dataset for which a generalization taxonomy was previously provided by the inventors of the algorithms.

For the induction phase (box 7 in Fig. 9), the following base induction algorithms were examined: PART decision list [37], Naive Bayes and C4.5 [34] and Logistics Regression.

The C4.5 algorithm was selected because it is considered a state-of-the-art decision tree algorithm and has been widely used in many other comparative studies. Moreover, in the method of this invention it is also wrapped in order to generate the anonymity rules. Thus, it was expected that C4.5 would show the minimal deterioration in classification accuracy. Naive Bayes was selected due to its simplicity and due to the fact that it uses a quite different learning bias from the one used by C4.5. The PART algorithm was used due to its resemblances to C4.5, thus allowing the effectiveness of the proposed method on various induction biases to be examined: C4.5 (using exactly the same inducer as the one used internally (wrapped) by kACTUS), PART (using a similar inducer as wrapped by kACTUS), naive Bayes and Logistics Regression (which has quite a different induction bias). All experiments were performed in the WEKA environment [38]. The experiments with C4.5 took place using J48, the Java version of C4.5.

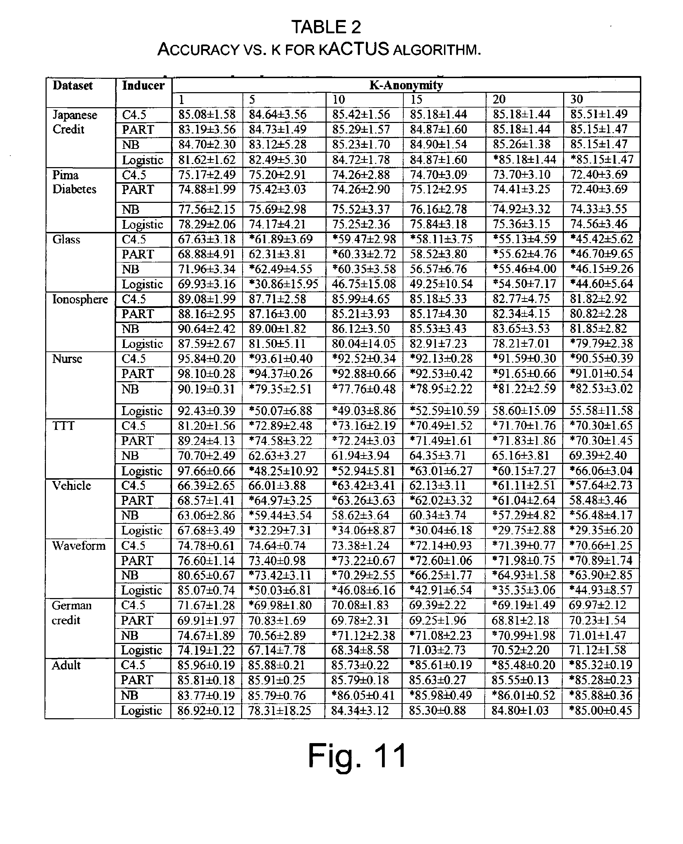

The effect of the value of k (anonymity level) on the accuracy is now analyzed. Fig. 11 shows Table 2, which lists the accuracy results obtained by the algorithm of the invention on six different values of k for various datasets using different inducers. In this section, it is assumed that all the input attributes are quasi-identifiers. Note that the column with k=1 represents the original result (i.e., when no anonymity has been performed) to make the examination of the effect of anonymity on the accuracy of results possible. The superscript "*" indicates that the degree of accuracy of the original dataset was significantly different from the corresponding result at a confidence level of 95%.

As expected, the results indicate that there is a tradeoff between accuracy performance and the anonymity level. Namely, increasing the anonymity level decreases accuracy. Moreover, usually there is correlation between the accuracy deterioration and the resemblances of the inducer used for the classifier learning to the inner inducer (the algorithm of the invention wraps the C4.5 algorithm). However, surprisingly in the Japanese Credit this correlation does not hold. In this dataset the logistics regression classifier improves its classification accuracy despite the anonymity constraint, while the C4.5 classifier does not manifest a similar behavior. This indicates, that for noisy datasets, the fact that kACTUS wraps a decision tree inducer; make it useful as a feature selection for simple classifiers such as logistics regression and naive bayes.

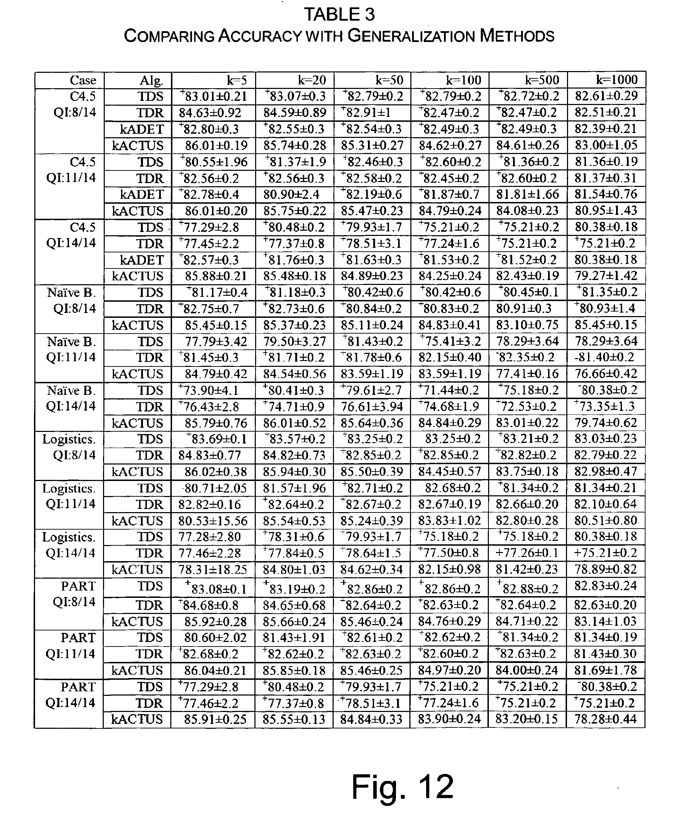

Now the algorithm of the invention is compared to other existing k-anonymity algorithms. First, the performance on the Adult dataset for different sizes of quasi-identifier sets and k-values on various inducers is compared. Following [11] the various quasi-identifier sets are based on the impact of the attributes on classification. Specifically the label "14/14" refers to a quasi-identifier set that contains all input attributes. The label "11/14" refers to a quasi-identifier set that contains the attributes {Age, Workclass, fnlwgt, Education, Education-num, Marital-status, occupation, sex, Capital-gain, Hours-per-week, Native-country}. The label "8/14" refers to a quasi-identifier set that contains the attributes {Age, Workclass, fnlwgt, occupation, sex, Capital-gain, Hours-per-week, Native-country}. All remaining attributes are included in the training set but are treated as non quasi-identifiers. Fig. 12 shows Table 3, which specifies the results obtained on the Adult dataset for comparing kACTUS with TDS, TDR and kADET, respectively. Note that, due to the restriction of kADET, only the performance on the C4.5 inducer could be compared (as kADET is embedded in this algorithm). The superscript "+" indicates that the accuracy of kACTUS was significantly higher than the corresponding algorithm (with the same k, the same base inducer, and the same dataset) at a confidence level of 95%. The "-" superscript indicates the accuracy was significantly lower. The results of the experimental study are encouraging. They indicate that there is only one significant case where TDS is more accurate and two cases when TDR is more accurate than kACTUS. In the other cases, kACTUS is significantly more accurate than TDS and TDR in 51 and 52 cases out of 72 cases, respectively. As expected, smaller quasi-identifier sets obtain a higher accuracy level. This can be explained by the fact that larger quasi-identifiers place a tighter restriction on the anonymity process. Table 3 indicates that there is no significant case where kADET is more accurate than kACTUS. On the other hand, kACTUS is significantly more accurate than kADET in 13 cases out of 18 cases. The results indicate that, from the accuracy perspective, kACTUS should be preferred for small values of k.

In order to conclude which algorithm performs best over multiple cases the procedure proposed in [39, 40] was followed. In the case of multiple classifiers the adjusted Friedman test was first used in order to reject the null hypothesis that all algorithms perform the same and then the Bonferroni-Dunn test was used to examine whether the algorithm of the invention performs significantly better than existing algorithms. The null-hypothesis, that all classifiers perform the same and the observed differences are merely random, was rejected using the adjusted Friedman test. Proceeding with the Bonferroni-Dunn test revealed that kACTUS statistically outperforms TDS, TDR and kADET with a 95% confidence level.

After having shown that kACTUS outperforms single dimensional generalization schemes the predictive performance of kACTUS was compared to the Mondrian algorithm which is a multidimensional k-anonymity [28].

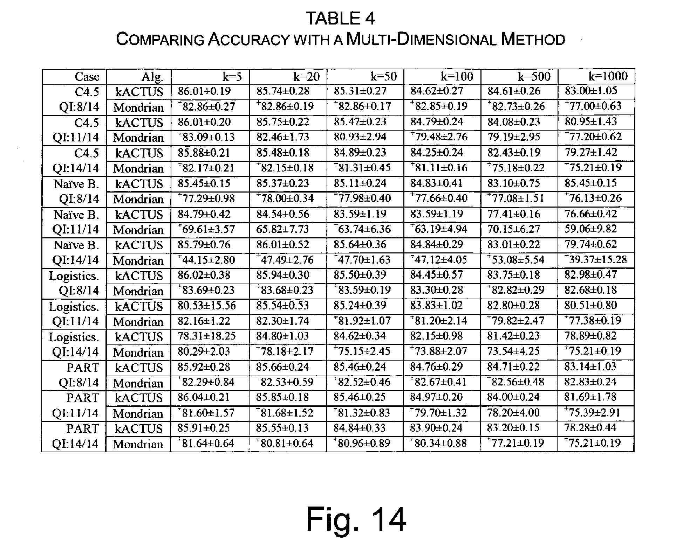

Fig. 14 shows Table 4, which presents the accuracy results obtained when comparing the predictive performance of kACTUS to the Mondrian algorithm. On average the accuracy of kACTUS is 7.84% higher than the accuracy of Mondrian. There is no case in which Mondrian significantly outperforms kACTUS. On the other hand, kACTUS significantly outperform Mondrian in 58 out of 72 cases. Using the Bonferroni-Dunn test it was concluded that kACTUS performs significantly better than existing algorithms.

It is expected that generalization methods outperform suppression methods because in the former case additional knowledge (the generalization tree) is provided to the k-anonymity algorithm and the algorithm has the choice for not entirely suppressing the datum but gently generalizes its value. In fact, one of the features of TDR is to automatically decide if it is better to perform suppression or generalization.

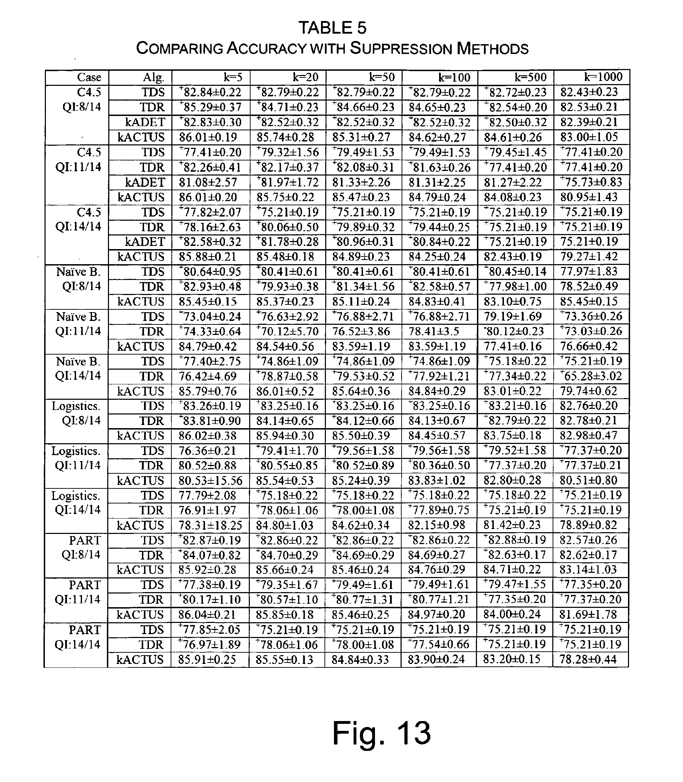

Now the possibility that the improved performance of kACTUS is derived from the fact that the algorithm of the invention uses suppression approach while others use generalization is examined. Specifically, for this examination all generalization algorithms are provided with one level of generalization trees, i.e. each value is generalized to the '?' value. Practically, this means that these algorithms become suppression algorithms. Fig. 13 shows Table 5, which presents the results of comparison of the algorithm of the invention with suppression methods. As it can be seen, there is only one significant case where TDR is more accurate than kACTUS. On the other hand, there is no case in which TDS or kADET is significantly better than kACTUS. Moreover kACTUS is significantly more accurate than TDS and TDR in 62 and 59 cases out of 72 cases, respectively. Comparing this result to the previous one (when a full generalization tree is used) indicates that generalization tree does improve the performance of TDS, TDR and kADET. More importantly when the contributing impact of the detailed generalization tree is deactivated, the superiority of kACTUS becomes clearer.

Now the actual computational cost of the algorithm of the invention is examined by measuring the running time, and its ability to handle a growing size of dataset in a graceful manner is examined. A scalability test proposed in [11] was performed to measure runtime cost of the algorithm on large datasets. The original Adult dataset with 45222 records and 7 quasi-identifiers was expanded as follows: for every original record t, $\sigma$-1 variations were added, where $\sigma$ is a scale factor. Together with all original records the enlarged dataset had $\sigma$ x 45,222 records. Each variation of t was generated by combining $\rho$ attributes from the original record, while the values of the remaining attributes were randomly drawn from the domain of the attributes.

All experiments were conducted on the following hardware configuration: a desktop computer implementing a Windows XP operating system with Intel Pentium 4-2.8GHz, and 2GB of physical memory. The dataset was loaded from MySql RDBMS Ver. 6 with indices defined on all quasi identifiers.

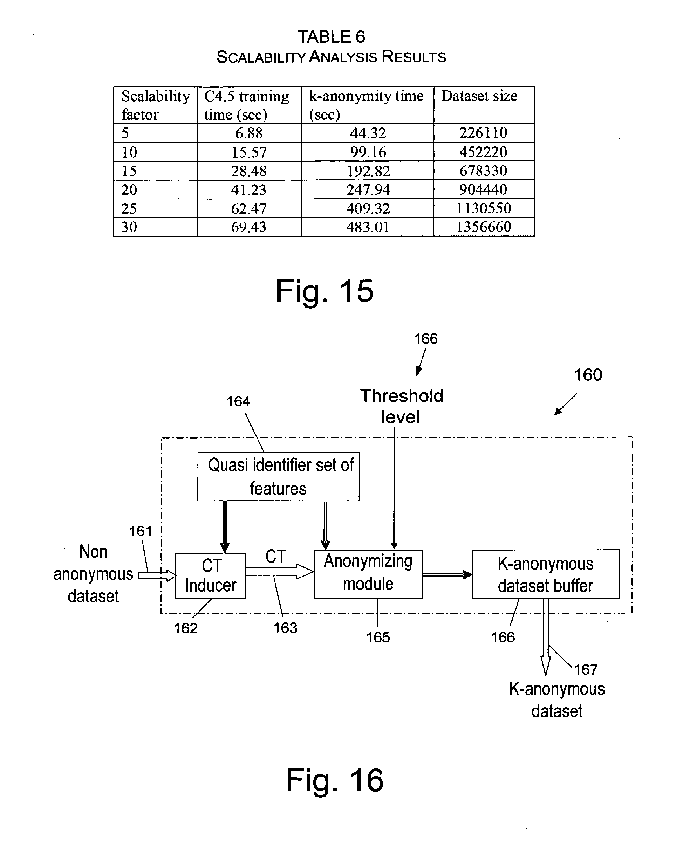

Fig.15 shows Table 6, which presents the time measured (in seconds) for various values of $\sigma$ with $\rho$=3 and k-threshold=150. The time needed to generate the decision tree (referred to as C4.5 training time) and the time needed to perform the k-anonymity procedure of the invention were measured separately. Model generation time reflects the runtime cost of J4.8 inducer in Weka package and it is beyond control of the inventors. The results indicate that the execution time is almost linear in the number of records. This agrees with Corollary 2 which indicates that the computational complexity overhead of the kACTUS algorithm is linear in the training set size. The largest execution time of 483 seconds was achieved for Scalability Factor of 30 with 1,356,660 records, which is comparable to the execution time reported by TDS.

The advantages of the new kACTUS algorithm, as observed from the experimental study described herein above, can be summarized as following:

- kACTUS is capable of applying k-anonymity on a given table with no significant effect on classification accuracy.
- kACTUS scales well with large datasets and anonymity levels.
- When compared to the state-of-the-art k-anonymity methods, kACTUS anonymized data can be used to induce classifiers which are of an equivalent or slightly higher degree of accuracy.

- kACTUS, unlike other methods, does not use any prior knowledge. In TDS, TDR, kADET, GA-based anonymizer [10] and Incognito [12], the user is required to provide a taxonomy tree for categorical attributes. This makes it difficult to use. Additionally it can become a source for disagreements among experts as described in [7] [13].
- When compared to the kADET algorithm, kACTUS is not restricted to a decision tree classifier, and its output can be used by any induction algorithms.
- Moreover, kADET embeds k-anonymity into the induction algorithm as part of the tree growing phase (via the split criterion). kACTUS, on the contrary, takes the pruning approach. Thus, kACTUS can wrap any top-down univariate decision tree inducer as a black box. It does not require revision of existing algorithms, where kADET, which embeds new k-anonymity splitting criteria into an existing decision trees inducer, requires increased effort from the practitioner when moving from one decision tree inducer to another. Moreover some decision tree inducers are very complicated to manipulate. It is not surprising that to use kADET with the C4.5 algorithm, the authors were forced to disable a certain feature of the original C4.5. Taking the pruning approach, C4.5 could be wrapped without disabling any feature and without revising its source.

The embodiment of the kACTUS algorithm described herein above has also several drawbacks, which can be minimized in other embodiments:

- Over-anonymity: when a certain node does not comply with the k anonymity restriction, kACTUS prunes it. This might be too aggressive and might result in over-anonymity of the data. Instead, the attribute can be generalized and not suppressed. For example consider an internal node with the following leaves "A1=Yellow (6)", "A1=Blue (7)" and "Al=Red (10)". Assuming that k=10 then the "Al" of the first two leaves will be totally suppressed. However, it is sufficient to replace this attributes with the value: "Yellow OR Blue" which implies a smaller data loss. A different origin for over-generalization happens if the original classification tree is already over-anonymous. The algorithm of the invention is capable of pruning a node and making its scope wider, but it cannot expand the node to narrow its scope.
- Instances loss: while there are some cases when instances loss cannot be avoided, the greedy nature of kACTUS can lead to unnecessary instances loss. In some decision trees, splitting criteria (such as the information gain in ID3 algorithm) attributes, which take on a large number of distinct values, tend to be selected near the root of the tree. This well-known observation can cause many nodes to be totally pruned in kACTUS (i.e., instances loss). Using information gain ratio instead (as in the C4.5 algorithm that has been used in the experimental study) biases the decision tree against considering attributes with a large number of distinct values, and thus it reduces the need to remove instances. Nevertheless as stated in Corollary 3 the instances loss is bounded by k.
- In two points, kACTUS performs random selection of instances. Results might be improved if a greedy selection rule is used. Moreover this randomness injection may cause the performance to be unstable. Nevertheless it should be noted that the last weakness has not manifested in the experimental studies presented above. As a matter of fact the standard deviation of kACTUS is quite similar to that of other anonymization methods.

Fig. 16 schematically illustrates the modules of the system which executes the kACTUS algorithm for generating a k-anonymous dataset from data in a non anonymous dataset. The system 160 is adapted to receive a non anonymous dataset 161 as input. The first module receiving the input is the Classification Tree Inducer (CTI) 162. The CTI module automatically induces a Classification Tree (CT) 163 from the original non anonymous dataset. Another input to the CTI module comes from a quasi-identifier set of features 164. The quasi-identifier set of features is associated with values which can be used to identify a specific entity whose features are part of the original non anonymous dataset. The quasi-identifier set of features is used by the CTI module for training the CT. Once the CT is trained it transfers to the anonymizing module 165.

The anonymizing module is adapted to receive an anonymity threshold level (K) in addition to the CT. According to the CT and the K received, the anonymizing module executes a k-anonymity process over the CT. The anonymizing module executes different pruning processes for each of the paths from a specific node to two or more leaves in the CT, for example, the pruning process is adapted to retain paths that comply with k-anonymity before pruning in their original form, while non-complying paths are pruned in order to try to make them comply with k-anonymity. In addition, the pruning process is adapted to be carried out by complementing instances of non-complying leaves with instances from their complying siblings. During the pruning process, pruned paths are exported to an accumulating buffer 166 which accumulates the output of the anonymizing module for generating a k-anonymous dataset 167. The k-anonymous dataset generated is adapted to be used by external users utilizing any mining algorithm for training a classifier over it.

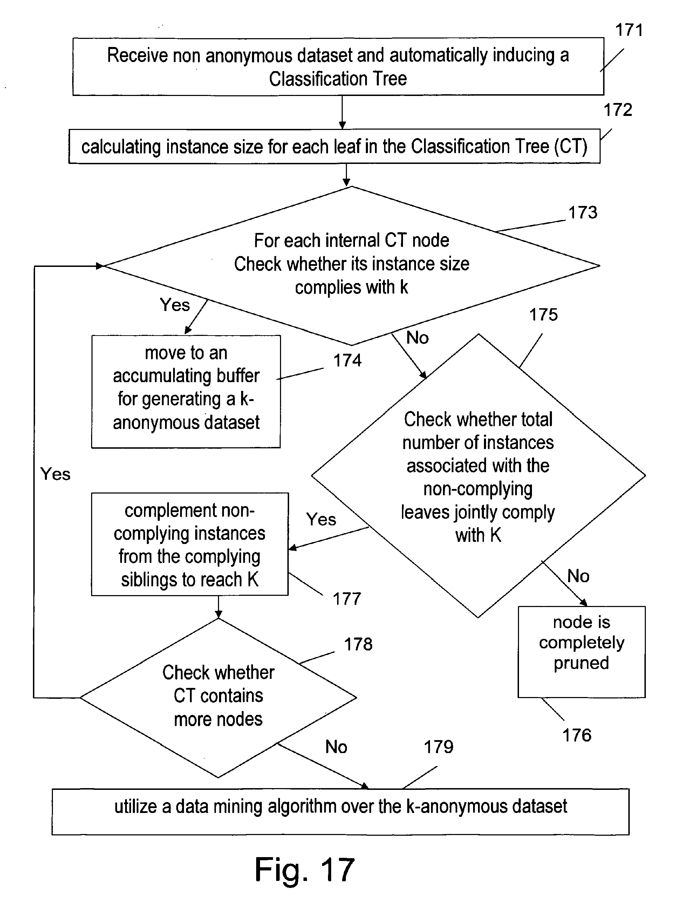

Fig. 17 is a flow chart presenting a computer implemented method of generating a K-anonymous dataset from the data in one or more original non anonymous dataset. The method comprises two phases; the steps in each phase are executed by the modules of the system described in Fig. 16. In the first phase the CT is generated and in the second phase the CT is pruned. The first step 171 in the first phase involves automatically inducing a Classification Tree (CT) from said one or more original non anonymous datasets over the projection of a quasi-identifier set of features. The second step 172 in the first phase is dedicated to calculating an instance size associated with exactly one path from root to leaf, for each leaf in the CT generated in the first step.

The second phase is executed repeatedly on different nodes in the CT until there are no nodes in the CT. The first step 173 in the second phase involves choosing an internal node from the CT of height=1 and checking whether its instance size complies with K. If the instance size of the internal node selected complies with K, step 174 is executed and the internal node is moved to an accumulating buffer for generating the K-anonymous dataset. If the instance size of the internal node does not complies with K, step 175 is executed. This step checks whether the total number of instances associated with the non-complying leaves jointly complies with K. If the non-complying leaves jointly do not comply with K, no instances are mounted to the accumulating buffer and step 176 is executed in which the node is completely pruned. If the non-complying leaves jointly comply with K, complementing non-complying instances with instances of complying siblings is executed in step 177 in order to reach K. At the end of each iteration, step 178 checks whether the CT contains more nodes. Once the entire CT is pruned the data in the accumulating buffer can be exported. This data constitutes the k-anonymous dataset of the original non anonymous dataset. In the last step 179 a data mining algorithm is used over the k-anonymous dataset generated. The data mining algorithm can be for example, a classification mining algorithm.

Although embodiments of the invention have been described by way of illustration, it will be understood that the invention may be carried out with many variations, modifications, and adaptations, without exceeding the scope of the claims.

## Bibliography

[1] M. Kantarcioglu, J. Jin and C. Clifton, "When Do Data Mining Results Violate Privacy?" Proceedings of the 2004 International Conference on Knowledge Discovery and Data Mining, pp. 599-604, 2004. (Purdue University)

[2] L. Rokach, R. Romano, O. Maimon, Negation Recognition in Medical Narrative Reports, Information Retrieval, 11(6): 499-538, 2008 (Springer)

[3] M.S. Wolf and C.L. Bennett, "Local Perspective of the Impact of the HIPAA Privacy Rule on Research," Cancer-Philadelphia Then Hoboken, vol. 106, no. 2, pp 474-479, 2006. (John Wiley & Sons)

[4] P. Samarati and L. Sweeney, "Generalizing Data to Provide Anonymity When Disclosing Information," Proceedings of the seventeenth ACM SIGACT-SIGMOD-SIGART symposium on Principles of Database Systems, pp. 188, 1998. (ACM)

[5] L. Sweeney, "k-anonymity: A Model for Protecting Privacy," International Journal on Uncertainty, Fuzziness and Knowledge-based Systems, vol. 10, no. 5, pp. 557-570, 2002. (World Scientific Syngapore)

[6] L. Sweeney, "Achieving k-Anonymity Privacy Protection Using Generalization and Suppression," International Journal on Uncertainty, Fuzziness and Knowledge-based Systems, vol. 10, no. 5, pp. 571-588, 2002. (World Scientific Syngapore)

[7] B.C.M. Fung, K. Wang and P.S. Yu, "Top-Down Specialization for Information and Privacy Preservation," Proceedings of the 21st IEEE International Conference on Data Engineering (ICDE 2005), Tokyo, Japan, pp. 205-216, April 2005.

[8] K. Wang, P.S. Yu and S. Chakraborty, "Bottom-Up Generalization: A Data Mining Solution to Privacy Protection," Proceedings of the fourth IEEE International Conference on Data Mining, pp. 205-216, 2004.

[9] L. Tiancheng and I. Ninghui, "Optimal K-Anonymity with Flexible Generalization Schemes through Bottom-Up Searching," Proceedings of the Sixth IEEE International Conference on Data Mining-Workshops, pp. 518-523, 2006. (IEEE Computer Society Washington, DC, USA)

[10] S.V. Iyengar, "Transforming Data to Satisfy Privacy Constraints," Proceedings of the eighth ACM SIGKDD International Conference on Knowledge Discovery and Data Mining. pp. 279-288, 2002. (ACM Press New York, NY, USA)

[11] B.C.M. Fung, K. Wang and P.S. Yu, "Anonymizing Classification Data for Privacy Preservation," IEEE Transactions on Knowledge and Data Engineering, vol. 19, no. 5, pp. 711-725, 2007. (IEEE Computer Society)

[12] K. LeFevre, D.J. DeWitt and R. Ramakrishnan, "Incognito: Efficient Full Domain k-Anonymity," Proceedings of the 2005 ACM SIGMOD international conference on Management of data, pp. 49-60, 2005. (ACM New York, NY, USA)

[13] A. Friedman, R. Wolff and A. Schuster, "Providing k-Anonymity in Data Mining," The International Journal on Very Large Data Bases, vol. 17, no. 4, pp. 789-804. (Springer-Verlag New York, Inc.)

[14] R. Kohavi and G.H. John, "Wrappers for Feature Subset Selection," Artificial Intelligence, vol. 97, no. 1-2, pp.

273-324, 1997. (Elsevier)

[15] V.S. Verykios, E. Bertino, I.N. Fovino, L.P. Provenza, Y. Saygin and Y. Theodoridis, "State-of-the-Art in Privacy Preserving Data Mining," ACM SIGMOD Record, vol. 33, no.1, pp. 50-57, 2004. (ACM New York, NY, USA)

[16] A. Agrawal and R. Srikant, "Privacy Preserving Data Mining," ACM SIGMOD Record, vol. 29, no. 2, pp. 439-450, 2000. (ACM New York, NY, USA)

[17] B. Gilburd, A. Schuster and R. Wolff, "k-TTP: A New Privacy Model for Large-Scale Distributed Environments," Proceedings of the tenth ACM SIGKDD International Conference on Knowledge Discovery and Data Mining, pp. 563-568, 2004. (ACM New York, NY, USA)

[18] Z. Yang, S. Zhong and R.N. Wright, "Privacy-Preserving Classification of Customer Data without Loss of Accuracy," Proceedings of the 5th International Conference on Data Mining, 2005. (Society for Industrial Mathematics)

[19] J. Roberto, Jr. Bayardo and A. Rakesh, "Data Privacy through Optimal k-Anonymization," Proceedings of the International Conference on Data Engineering, vol. 21, pp. 217-228, 2005. (IEEE Computer Society Press)

[20] A. Blum, C. Dwork, F. McSherry and K. Nissim, "Practical Privacy: The SuLQ framework," Proceedings of the twenty-fourth ACM SIGMOD-SIGACT SIGART Symposium on Principles of Database Systems, pp. 128-138, New York, NY, USA, June 2005. (ACM New York, NY, USA)

[21] S. Chawla, C. Dwork, F. McSherry, A. Smith and H. Wee, "Toward Privacy in Public Databases," Theory of Cryptography Conference, pp.363-385,2005.

[22] K. Wang, B.C.M. Fung and P.S. Yu, "Template-Based Privacy Preservation in Classification Problems," The Fifth IEEE International Conference on Data Mining, pp. 466-473, 2005.

[23] E.Bertino, B.C. Ooi, Y. Yang and R.H. Deng, "Privacy and Ownership Preserving of Outsourced Medical Data," Proceedings of the International Conference on Data Engineering, vol. 21, pp. 521- 532, 2005. (IEEE Computer Society Press)

[24] G. Aggarwal, A. Feder, K. Kenthapadi, R. Motwani, R. Panigrahy, D. Thomas and A. Zhu, "Approximation Algorithms for k-Anonymity," Journal of Privacy Technology (JOPT), 2005.

[25] A. Meyerson and R. Williams, "On the Complexity of Optimal k-Anonymity," Proceedings of the twenty-third ACM SIGMOD-SIGACT-SIGART .Symposium on Principles of Database Systems, pp. 223-228, 2004. (ACM New York, NY, USA)

[26] P. Samarati, "Protecting Respondents' Identities in Microdata Release," IEEE Transactions on Knowledge and Data Engineering, vol. 13, no. 6, pp. 1010-1027, 2001. (IEEE Computer Society)

[27] K. LeFevre, D.J. DeWitt and R. Ramakrishnan, "Mondrian Multidimensional k-Anonymity" Proceedings of the 22nd International Conference on Data Engineering, pp. 25, April 2006.

[28] K. LeFevre, D.J. DeWitt and R. Ramakrishnan, "Workload-Aware Anonymization," Proceedings of the 12th ACM SIGKDD International Conference on Knowledge Discovery and Data Mining, pp. 277-286, 2006. (ACM New York, NY, USA)

[29] L. Sweeney, "Datafly: A System for Providing Anonymity in Medical Data," Proceedings of the IFIP TC11 WG11.3 Eleventh International Conference on Database Securty XI: Status and Prospects, pp. 356-381, 1997. (Chapman & Hall, Ltd. London, UK, UK)

[31] S. Grumbach, T. Milo, "Towards Tractable Algebras for Bags," Journal of Computer and System Sciences, vol. 52, no. 3, pp. 570-588, 1996. (Elsevier)

[32] Y. Du, T. Xia, Y. Tao, D. Zhang and F. Zhu, "On Multidimensional k-Anonymity with Local Recoding Generalization," Proceedings of International Conference on Data Engineering (ICDE), pp. 1422-1424, 2007.

[33] L. Rokach, L. Naamani, A. Shmilovici, Pessimistic Cost-Sensitive Active Learning of Decision Trees, Data Mining and Knowledge Discovery, 17(2): 283-316, 2008 (Springer)

[34] J.R. Quinlan, "C4.5: Programs for Machine Learning," Morgan Kaufmann, 1993.

[35] E. Alpaydin, "Combined 5x2 cv F Test for Comparing Supervised Classification Learning Classifiers," Neural Computation, vol. 11, no. 8, pp. 1885-1892, 1999. (MIT Press)

[36] A. Asuncion and D.J. Newman, D,J, "UCI Machine Leaning Repository," http://mlearn.ics.uci.edu/MLRepository.html, Irvine, CA: University of California, School of Information and Computer Science, 2007.

[37] E. Frank and I.H. Witten, "Generating Accurate Rule Sets Without Global Optimization," Proceedings of the 15th International Conference on Machine Learning, pp. 144-151, 1998. (Morgan Kaufmann)

[38] I.H. Witten and E. Frank, "Data Mining: Practical Machine Learning Tools," 2005. (Morgan Kaufmann)

[39] J. Demsar, "Statistical Comparisons of Classifiers over Multiple Data Sets," Journal of Machine Learning Research, vol. 7, pp. 1-30, 2006. (MIT Press Cambridge, MA, USA)

[40] L. Rokach, Genetic Algorithm-Based Feature Set Partitioning for Classification Problems, Pattern Recognition, 41(5): 1693-1717, 2008 (Elsevier)

**Claims**

1. A computer implemented method of generating a K-anonymous dataset from the data in one or more original non anonymous data sets, said method comprising:

    In the first phase:

    a. automatically inducing a Classification Tree (CT) from said one or more original non anonymous datasets over the projection of a quasi-identifier set of features; and
    b. calculating an instance size associated with exactly one path from root to leaf, for each leaf;

    In the second phase:

    c. choosing an internal node from said CT of height=1 and checking whether its instance size complies with K; wherein

        I. if the instance size of said internal node complies with K, it is moved to an accumulating buffer for generating said K-anonymous dataset;
        II. if the instance size of said internal node does not complies with K, checking whether the total number of instances associated with the non-complying leaves jointly complies with K; wherein

            i. if said non-complying leaves jointly comply with K, complementing non-complying instances with instances of complying siblings to reach K;
            ii. if said non-complying leaves jointly do not comply with K, no instances are mounted to the accumulating buffer, and said node is completely pruned; and

    d. performing step c as long as there are nodes in said CT.

2. The method of claim 4, wherein a data mining algorithm is used over the k-anonymous dataset.

3. The method of claim 5, wherein the data mining algorithm is a classification mining algorithm.

4. A system for generating a k-anonymous dataset from the data in an original non anonymous dataset, wherein said k-anonymous dataset can be used by external users utilizing any mining algorithm to extract information from said k-anonymous dataset, said system comprising:

    a. a Classification Tree Inducer (CTI) module which is used to automatically induce a Classification Tree (CT) from said original non anonymous dataset;
    b. a quasi-identifier set of features, whose associated values can be used to identify a specific entity whose features are part of said original non anonymous dataset, wherein said quasi-identifier set of features is used for training said Classification Tree;
    c. an anonymizing module adapted to receive an anonymity threshold level (K) and to execute a k-anonymity process over said Classification Tree, wherein said k-anonymity process is adapted to execute different pruning processes for each of the paths from a specific node to two or more leaves; and
    d. an accumulating buffer for accumulating the output of said anonymizing module for generating said k-anonymous dataset.

5. The system of claim 1, adapted such that the pruning process retains paths that comply with k-anonymity before pruning in their original form, while non-complying paths are pruned in order to try to make them comply with k-anonymity.

6. The system of claim 1, adapted such that the pruning process is carried out by complementing instances of non-complying leaves with instances from their complying siblings.

| age | workclass | fnlwgt | edu | edu-num | marital-status | occupation | relationship | race | sex | capital-gain | capital-loss | hours-per-week | native-country | salary >50K |
|---|---|---|---|---|---|---|---|---|---|---|---|---|---|---|
| 39 | Private | 77516 | BA | 13 | Married | Exceecutive | Not-in-family | White | M | 2174 | 0 | 40 | US | <=50K |
| 39 | Private | 83311 | BA | 13 | Married | Exceecutive | Husband | White | M | 0 | 0 | 13 | US | <=50K |
| 38 | Private | 215646 | BA | 9 | Divorced | Exceecutive | Not-in-family | White | M | 0 | 0 | 40 | US | <=50K |
| 53 | Private | 234721 | BA | 7 | Married | Exceecutive | Husband | Black | M | 0 | 0 | 40 | US | <=50K |
| 28 | Private | 338409 | BA | 13 | Married | Exceecutive | Wife | Black | M | 0 | 0 | 40 | Cuba | <=50K |
| 37 | Private | 284582 | BA | 14 | Married | Exceecutive | Wife | White | M | 0 | 0 | 40 | Cuba | <=50K |
| 49 | Private | 160187 | BA | 5 | Married | Exceecutive | Not-in-family | Black | M | 0 | 0 | 16 | Cuba | <=50K |
| 52 | State-gov | 209642 | BA | 9 | Married | Exceecutive | Husband | White | M | 0 | 0 | 45 | Cuba | >50K |
| 31 | State-gov | 45781 | BA | 14 | Married | Exceecutive | Not-in-family | White | M | 14084 | 0 | 50 | Cuba | >50K |
| 42 | State-gov | 159449 | MA | 13 | Married | Exceecutive | Husband | White | M | 5178 | 0 | 40 | Cuba | >50K |
| 37 | State-gov | 280464 | MA | 10 | Married | Exceecutive | Husband | Black | F | 0 | 0 | 80 | Cuba | >50K |
| 30 | State-gov | 141297 | MA | 13 | Married | Sales | Husband | Asian | F | 0 | 0 | 40 | Cuba | >50K |
| 30 | State-gov | 141297 | MA | 13 | Married | Sales | Husband | Asian | F | 0 | 2 | 60 | Cuba | >50K |
| 30 | State-gov | 141297 | MA | 13 | Married | Sales | Husband | Asian | F | 0 | 1 | 80 | Cuba | <=50K |
| 34 | State-gov | 245487 | 7th-8th | 4 | Married | Sales | Husband | Indian | F | 0 | 0 | 45 | Mexico | <=50K |

# Fig. 1

| age | workclass | fnlwgt | edu | edu-num | marital-status | occupation | relationship | race | sex | native-country |
|---|---|---|---|---|---|---|---|---|---|---|
| 39 | Private | 77516 | BA | 13 | Married | Exceecutive | Not-in-family | White | M | US |
| 39 | Private | 83311 | BA | 13 | Married | Exceecutive | Husband | White | M | US |
| 38 | Private | 215646 | BA | 9 | Divorced | Exceecutive | Not-in-family | White | M | US |
| 53 | Private | 234721 | BA | 7 | Married | Exceecutive | Husband | Black | M | US |
| 28 | Private | 338409 | BA | 13 | Married | Exceecutive | Wife | Black | M | Cuba |
| 37 | Private | 284582 | BA | 14 | Married | Exceecutive | Wife | White | M | Cuba |
| 49 | Private | 160187 | BA | 5 | Married | Exceecutive | Not-in-family | Black | M | Cuba |
| 52 | State-gov | 209642 | BA | 9 | Married | Exceecutive | Husband | White | M | Cuba |
| 31 | State-gov | 45781 | BA | 14 | Married | Exceecutive | Not-in-family | White | M | Cuba |
| 42 | State-gov | 159449 | MA | 13 | Married | Exceecutive | Husband | White | M | Cuba |
| 37 | State-gov | 280464 | MA | 10 | Married | Exceecutive | Husband | Black | F | Cuba |
| 30 | State-gov | 141297 | MA | 13 | Married | Sales | Husband | Asian | F | Cuba |
| 30 | State-gov | 141297 | MA | 13 | Married | Sales | Husband | Asian | F | Cuba |
| 30 | State-gov | 141297 | MA | 13 | Married | Sales | Husband | Asian | F | Cuba |
| 34 | State-gov | 245487 | 7th-8th | 4 | Married | Sales | Husband | Indian | F | Mexico |

# Fig. 2

```
marital-status = Married-civ-spouse
|     education = 11th: <=50K. (271)
|     education = Masters: >50K. (713)
|     education = 9th: <=50K. (158)
|     education = HS-grad: <=50K. (3436)
|     education = Some-college
|     |     occupation = Handlers-cleaners: <=50K. (69)
|     |     occupation = Exec-managerial
|     |     |     workclass = Private
|     |     |     |     race = Black: <=50K. (6)
|     |     |     |     race = White: >50K. (190)
|     |     |     |     race = Asian-Pac-Islander: <=50K. (3)
|     |     |     |     race = Other: <=50K. (1)
|     |     |     |     race = Amer-Indian-Eskimo: <=50K. (2)
|     |     |     workclass = Self-emp-not-inc: <=50K. (39)
|     |     |     workclass = State-gov: >50K. (8)
|     |     |     workclass = Federal-gov: >50K. (16)
|     |     |     workclass = Local-gov: <=50K. (23)
|     |     |     workclass = Self-emp-inc
|     |     |     |     sex = Male: >50K. (42)
|     |     |     |     sex = Female: <=50K. (4)
|     |     |     workclass = Without-pay: >50K. (0)
marital-status = Married-AF-spouse: <=50K. (16)
```

# Fig. 3

```
marital-status = Married-civ-spouse
|     education = 11th: <=50K. (271)
|     education = Masters: >50K. (713)
|     education = 9th: <=50K. (158)
|     education = HS-grad: <=50K. (3436)
|     education = Some-college
|     |     occupation = Handlers-cleaners: <=50K. (69)
|     |     occupation = Exec-managerial
|     |     |     workclass = Private (100)
|     |     |     workclass = Self-emp-not-inc: <=50K. (39)
|     |     |     workclass = State-gov: >50K. (8)
|     |     |     workclass = Federal-gov: >50K. (16)
|     |     |     workclass = Local-gov: <=50K. (23)
|     |     |     workclass = Self-emp-inc
|     |     |     |     sex = Male: >50K. (42)
|     |     |     |     sex = Female: <=50K. (4)
|     |     |     workclass = Without-pay: >50K. (0)
marital-status = Married-AF-spouse: <=50K. (16)
```

# Fig. 4

```
01: marital-status = Married-civ-spouse
02: |     education = 11th: <=50K. (271)
03: |     education = Masters: >50K. (713)
04: |     education = 9th: <=50K. (158)
05: |     education = HS-grad: <=50K. (3436)
06: |     education = Some-college
07: |     |     occupation = Handlers-cleaners: <=50K. (69)
08: |     |     occupation = Exec-managerial
09: |     |     |     workclass = Private (100)
15: |     |     |     workclass = Self-emp-not-inc: <=50K. (39)
16: |     |     |     workclass = State-gov: >50K. (8)
17: |     |     |     workclass = Federal-gov: >50K. (16)
18: |     |     |     workclass = Local-gov: <=50K. (23)
19: |     |     |     workclass = Self-emp-inc (46)
22: |     |     |     workclass = Without-pay: >50K. (0)
23: marital-status = Married-AF-spouse: <=50K. (16)
```

# Fig. 5

```
01: marital-status = Married-civ-spouse
02: |     education = 11th: <=50K. (271)
03: |     education = Masters: >50K. (713)
04: |     education = 9th: <=50K. (158)
05: |     education = HS-grad: <=50K. (3436)
06: |     education = Some-college
07: |     |     occupation = Handlers-cleaners: <=50K. (69)
08: |     |     occupation = Exec-managerial (132)
23: marital-status = Married-AF-spouse: <=50K. (16)
```

# Fig. 6

```
kACTUS (S,Q,CT,k)
Input: S (Original dataset), Q (The quasi-identifier
set), k (Anonymity threshold)
Output: S' (Anonymous dataset)


1: CT← CTI(π_{Q∪y}S) /* phase 1 */
2: Return Anonymize (SO,Q,CT,k) /* phase 2 */

Anonymize (SO,Q,CT,k)
Input: SO (Original dataset to be anonyimized), Q (The
quasi-identifier set), CT      (Classification tree),
k (Anonymity threshold)
Output: S'      Anonymous dataset


3: S←SO /* work on a copy of the original dataset */
4: S'←∅
5: WHILE height(root(CT))>0
6:    p←node in CT whose height=1
7:    nui ← 0 /* number of uncomplying instances */
8:    SP ← ∅/* candidate instances to be suppressed */
9:    S_{extra} ← ∅/* extra complying instances */
10:    FOR each v∈children(p) DO
11:    IF |σ_{ant(v)}(S)| ≥ k THEN

12:        SV←randomSelect(|σ_{ant(v)}(S)|-k,  σ_{ant(v)}(S))

13:        S_{extra} ← S_{extra} ∪ SV
14:        SP←SP∪ (σ_{ant(v)} (S)-SV)
15:    ELSE
16:        nui←nui+|σ_{ant(v)}(S)|
17:    END IF
18:    END FOR
19:    IF nui<k THEN
20:    requried←k-nui
21:    IF |S_{extra}| ≥ required THEN

22:        S_{not\_required}←randomSelect(|S_{extra}|-required,  S_{extra})
23:    ELSE
24:            S_{not\_required} ← S_{extra}
25:    END IF
26:        SP←SP∪ S_{not\_required}
27:    END IF
28:    suppressComplyingChildren(S',SP,Q, p)
29:    S←S-SP
```

# Fig. 7

```
30:   prune(CT,p)
31: END WHILE
32: IF |S| ≥ k THEN S' ← S' ∪ suppress (S,Q,∅)
Suppress (R,Q,pred)
Input: R  (Dataset),  Q  (The  quasi-identifier  set),  v
(Predicates)
Output: R' (Suppressed dataset)

33: R' ← R
34: For each a ∈ Q Do
35:     If a does not appear in an antecedent in v
36:         δ_{a → τ}(R')
37:         End If
38: End For
39: Return R'


suppressComplyingChildren(S',S,Q, p)
Input: S' (anonotmous dataset), S (original dataset), Q (
quasi-identifier), p (parent node)

40: FOR each v ∈ children(p)   DO
41:    IF |σ_{ant(v)}(S)| ≥ k THEN
42:         Sv ← σ_{ant(v)}(S)
43:         S' ← S' ∪ suppress (Sv,Q,ant(v))
44:    END IF
45: END FOR
```

# Fig. 7 (cont.)

```
Suppress (R,Q,v)
Input: R  (Dataset),  Q  (The  quasi-identifier  set),  v
(Antecedents)

Output: R' (Suppressed dataset)

1:R' ←R
2:For each a∈Q Do
3:    IF a does not appear in a antecedent of v
4:    δ_{a→'All'}(R')
5:    Else
6:    If a doesn't appear in v with equality predicate
7:        val←mean value of a in R
8:        δ_{a→val}(R')
9:        End If
10:    End If
11:End For
12:Return R'
```

# Fig. 8

**Fig. 9**

# TABLE 1
## The Properties of the Datasets

| Dataset | Application Area | Number of tuples | Number of attributes | Proportion of numeric attributes | Number of classes |
|---|---|---|---|---|---|
| Adult | Social - Predict whether income exceeds $50K/yr based on census data. Also known as "Census Income" dataset | 48842 | 14 | 42.85% | 2 |
| German credit | Financial - classify people described by a set of attributes as good or bad credit risks. | 1000 | 20 | 35% | 2 |
| Glass | Physical - USA Forensic Science Service; 6 types of glass; defined in terms of their oxide content | 214 | 10 | 100% | 7 |
| Ionosphere | Physical - Classification of radar returns from the ionosphere | 351 | 34 | 100% | 2 |
| Japanese Credit | Financial - classify people described by a set of attributes as good or bad credit risks. | 125 | 15 | 40% | 2 |
| Nurse | Social - rank applications for nursery schools | 12960 | 8 | 0% | 5 |
| Pima Diabetes | Life-The diagnostic, binary-valued variable investigated is whether the patient shows signs of diabetes | 768 | 8 | 100% | 2 |
| TTT | Game - Binary classification task on possible configurations of tic-tac-toe game | 958 | 9 | 0% | 2 |
| Vehicle | Image Processing - to classify a given silhouette as one of four types of vehicle. | 946 | 18 | 100% | 4 |
| Waveform | Physical – classification of waveformss | 5000 | 40 | 100% | 3 |

# Fig. 10

## TABLE 2
### ACCURACY VS. K FOR KACTUS ALGORITHM.

| Dataset | Inducer | K-Anonymity | | | | | |
|---|---|---|---|---|---|---|---|
| | | 1 | 5 | 10 | 15 | 20 | 30 |
| Japanese Credit | C4.5 | 85.08±1.58 | 84.64±3.56 | 85.42±1.56 | 85.18±1.44 | 85.18±1.44 | 85.51±1.49 |
| | PART | 83.19±3.56 | 84.73±1.49 | 85.29±1.57 | 84.87±1.60 | 85.18±1.44 | 85.15±1.47 |
| | NB | 84.70±2.30 | 83.12±5.28 | 85.23±1.70 | 84.90±1.54 | 85.26±1.38 | 85.15±1.47 |
| | Logistic | 81.62±1.62 | 82.49±5.30 | 84.72±1.78 | 84.87±1.60 | *85.18±1.44 | *85.15±1.47 |
| Pima Diabetes | C4.5 | 75.17±2.49 | 75.20±2.91 | 74.26±2.88 | 74.70±3.09 | 73.70±3.10 | 72.40±3.69 |
| | PART | 74.88±1.99 | 75.42±3.03 | 74.26±2.90 | 75.12±2.95 | 74.41±3.25 | 72.40±3.69 |
| | NB | 77.56±2.15 | 75.69±2.98 | 75.52±3.37 | 76.16±2.78 | 74.92±3.32 | 74.33±3.55 |
| | Logistic | 78.29±2.06 | 74.17±4.21 | 75.25±2.36 | 75.84±3.18 | 75.36±3.15 | 74.56±3.46 |
| Glass | C4.5 | 67.63±3.18 | *61.89±3.69 | *59.47±2.98 | *58.11±3.75 | *55.13±4.59 | *45.42±5.62 |
| | PART | 68.88±4.91 | 62.31±3.81 | *60.33±2.72 | 58.52±3.80 | *55.62±4.76 | *46.70±9.65 |
| | NB | 71.96±3.34 | *62.49±4.55 | *60.35±3.58 | 56.57±6.76 | *55.46±4.00 | *46.15±9.26 |
| | Logistic | 69.93±3.16 | *30.86±15.95 | 46.75±15.08 | 49.25±10.54 | *54.50±7.17 | *44.60±5.64 |
| Ionosphere | C4.5 | 89.08±1.99 | 87.71±2.58 | 85.99±4.65 | 85.18±5.33 | 82.77±4.75 | 81.82±2.92 |
| | PART | 88.16±2.95 | 87.16±3.00 | 85.21±3.93 | 85.17±4.30 | 82.34±4.15 | 80.82±2.28 |
| | NB | 90.64±2.42 | 89.00±1.82 | 86.12±3.50 | 85.53±3.43 | 83.65±3.53 | 81.85±2.82 |
| | Logistic | 87.59±2.67 | 81.50±5.11 | 80.04±14.05 | 82.91±7.23 | 78.21±7.01 | *79.79±2.38 |
| Nurse | C4.5 | 95.84±0.20 | *93.61±0.40 | *92.52±0.34 | *92.13±0.28 | *91.59±0.30 | *90.55±0.39 |
| | PART | 98.10±0.28 | *94.37±0.26 | *92.88±0.66 | *92.53±0.42 | *91.65±0.66 | *91.01±0.54 |
| | NB | 90.19±0.31 | *79.35±2.51 | *77.76±0.48 | *78.95±2.22 | *81.22±2.59 | *82.53±3.02 |
| | Logistic | 92.43±0.39 | *50.07±6.88 | *49.03±8.86 | *52.59±10.59 | 58.60±15.09 | 55.58±11.58 |
| TTT | C4.5 | 81.20±1.56 | *72.89±2.48 | *73.16±2.19 | *70.49±1.52 | *71.70±1.76 | *70.30±1.65 |
| | PART | 89.24±4.13 | *74.58±3.22 | *72.24±3.03 | *71.49±1.61 | *71.83±1.86 | *70.30±1.45 |
| | NB | 70.70±2.49 | 62.63±3.27 | 61.94±3.94 | 64.35±3.71 | 65.16±3.81 | 69.39±2.40 |
| | Logistic | 97.66±0.66 | *48.25±10.92 | *52.94±5.81 | *63.01±6.27 | *60.15±7.27 | *66.06±3.04 |
| Vehicle | C4.5 | 66.39±2.65 | 66.01±3.88 | *63.42±3.41 | 62.13±3.11 | *61.11±2.51 | *57.64±2.73 |
| | PART | 68.57±1.41 | *64.97±3.25 | *63.26±3.63 | *62.02±3.32 | *61.04±2.64 | 58.48±3.46 |
| | NB | 63.06±2.86 | *59.44±3.54 | 58.62±3.64 | 60.34±3.74 | *57.29±4.82 | *56.48±4.17 |
| | Logistic | 67.68±3.49 | *32.29±7.31 | *34.06±8.87 | *30.04±6.18 | *29.75±2.88 | *29.35±6.20 |
| Waveform | C4.5 | 74.78±0.61 | 74.64±0.74 | 73.38±1.24 | *72.14±0.93 | *71.39±0.77 | *70.66±1.25 |
| | PART | 76.60±1.14 | 73.40±0.98 | *73.22±0.67 | *72.60±1.06 | *71.98±0.75 | *70.89±1.74 |
| | NB | 80.65±0.67 | *73.42±3.11 | *70.29±2.55 | *66.25±1.77 | *64.93±1.58 | *63.90±2.85 |
| | Logistic | 85.07±0.74 | *50.03±6.81 | *46.08±6.16 | *42.91±6.54 | *35.35±3.06 | *44.93±8.57 |
| German credit | C4.5 | 71.67±1.28 | *69.98±1.80 | 70.08±1.83 | 69.39±2.22 | *69.19±1.49 | 69.97±2.12 |
| | PART | 69.91±1.97 | 70.83±1.69 | 69.78±2.31 | 69.25±1.96 | 68.81±2.18 | 70.23±1.54 |
| | NB | 74.67±1.89 | 70.56±2.89 | *71.12±2.38 | *71.08±2.23 | *70.99±1.98 | 71.01±1.47 |
| | Logistic | 74.19±1.22 | 67.14±7.78 | 68.34±8.58 | 71.03±2.73 | 70.52±2.20 | 71.12±1.58 |
| Adult | C4.5 | 85.96±0.19 | 85.88±0.21 | 85.73±0.22 | *85.61±0.19 | *85.48±0.20 | *85.32±0.19 |
| | PART | 85.81±0.18 | 85.91±0.25 | 85.79±0.18 | 85.63±0.27 | 85.55±0.13 | *85.28±0.23 |
| | NB | 83.77±0.19 | 85.79±0.76 | *86.05±0.41 | *85.98±0.49 | *86.01±0.52 | *85.88±0.36 |
| | Logistic | 86.92±0.12 | 78.31±18.25 | 84.34±3.12 | 85.30±0.88 | 84.80±1.03 | *85.00±0.45 |

# Fig. 11

## TABLE 3
### COMPARING ACCURACY WITH GENERALIZATION METHODS

| Case | Alg. | k=5 | k=20 | k=50 | k=100 | k=500 | k=1000 |
|------|------|------|------|------|------|------|------|
| C4.5 QI:8/14 | TDS | +83.01±0.21 | +83.07±0.3 | +82.79±0.2 | +82.79±0.2 | +82.72±0.2 | 82.61±0.29 |
| | TDR | 84.63±0.92 | 84.59±0.89 | +82.91±1 | +82.47±0.2 | +82.47±0.2 | 82.51±0.21 |
| | kADET | +82.80±0.3 | +82.55±0.3 | +82.54±0.3 | +82.49±0.3 | +82.49±0.3 | 82.39±0.21 |
| | kACTUS | 86.01±0.19 | 85.74±0.28 | 85.31±0.27 | 84.62±0.27 | 84.61±0.26 | 83.00±1.05 |
| C4.5 QI:11/14 | TDS | +80.55±1.96 | +81.37±1.9 | +82.46±0.3 | +82.60±0.2 | +81.36±0.2 | 81.36±0.19 |
| | TDR | +82.56±0.2 | +82.56±0.3 | +82.58±0.2 | +82.45±0.2 | +82.60±0.2 | 81.37±0.31 |
| | kADET | +82.78±0.4 | 80.90±2.4 | +82.19±0.6 | +81.87±0.7 | 81.81±1.66 | 81.54±0.76 |
| | kACTUS | 86.01±0.20 | 85.75±0.22 | 85.47±0.23 | 84.79±0.24 | 84.08±0.23 | 80.95±1.43 |
| C4.5 QI:14/14 | TDS | +77.29±2.8 | +80.48±0.2 | +79.93±1.7 | +75.21±0.2 | +75.21±0.2 | 80.38±0.18 |
| | TDR | +77.45±2.2 | +77.37±0.8 | +78.51±3.1 | +77.24±1.6 | +75.21±0.2 | +75.21±0.2 |
| | kADET | +82.57±0.3 | +81.76±0.3 | +81.63±0.3 | +81.53±0.2 | +81.52±0.2 | 80.38±0.18 |
| | kACTUS | 85.88±0.21 | 85.48±0.18 | 84.89±0.23 | 84.25±0.24 | 82.43±0.19 | 79.27±1.42 |
| Naïve B. QI:8/14 | TDS | +81.17±0.4 | +81.18±0.3 | +80.42±0.6 | +80.42±0.6 | +80.45±0.1 | +81.35±0.2 |
| | TDR | +82.75±0.7 | +82.73±0.6 | +80.84±0.2 | +80.83±0.2 | 80.91±0.3 | +80.93±1.4 |
| | kACTUS | 85.45±0.15 | 85.37±0.23 | 85.11±0.24 | 84.83±0.41 | 83.10±0.75 | 85.45±0.15 |
| Naïve B. QI:11/14 | TDS | 77.79±3.42 | 79.50±3.27 | +81.43±0.2 | +75.41±3.2 | 78.29±3.64 | 78.29±3.64 |
| | TDR | +81.45±0.3 | +81.71±0.2 | +81.78±0.6 | 82.15±0.40 | +82.35±0.2 | -81.40±0.2 |
| | kACTUS | 84.79±0.42 | 84.54±0.56 | 83.59±1.19 | 83.59±1.19 | 77.41±0.16 | 76.66±0.42 |
| Naïve B. QI:14/14 | TDS | +73.90±4.1 | +80.41±0.3 | +79.61±2.7 | +71.44±0.2 | +75.18±0.2 | +80.38±0.2 |
| | TDR | +76.43±2.8 | +74.71±0.9 | 76.61±3.94 | +74.68±1.9 | +72.53±0.2 | +73.35±1.3 |
| | kACTUS | 85.79±0.76 | 86.01±0.52 | 85.64±0.36 | 84.84±0.29 | 83.01±0.22 | 79.74±0.62 |
| Logistics. QI:8/14 | TDS | +83.69±0.1 | +83.57±0.2 | +83.25±0.2 | 83.25±0.2 | +83.21±0.2 | 83.03±0.23 |
| | TDR | 84.83±0.77 | 84.82±0.73 | +82.85±0.2 | +82.85±0.2 | +82.82±0.2 | 82.79±0.22 |
| | kACTUS | 86.02±0.38 | 85.94±0.30 | 85.50±0.39 | 84.45±0.57 | 83.75±0.18 | 82.98±0.47 |
| Logistics. QI:11/14 | TDS | 80.71±2.05 | 81.57±1.96 | +82.71±0.2 | 82.68±0.2 | +81.34±0.2 | 81.34±0.21 |
| | TDR | 82.82±0.16 | +82.64±0.2 | +82.67±0.2 | 82.67±0.19 | 82.66±0.20 | 82.10±0.64 |
| | kACTUS | 80.53±15.56 | 85.54±0.53 | 85.24±0.39 | 83.83±1.02 | 82.80±0.28 | 80.51±0.80 |
| Logistics. QI:14/14 | TDS | 77.28±2.80 | +78.31±0.6 | +79.93±1.7 | +75.18±0.2 | +75.18±0.2 | 80.38±0.18 |
| | TDR | 77.46±2.28 | +77.84±0.5 | +78.64±1.5 | +77.50±0.8 | +77.26±0.1 | +75.21±0.2 |
| | kACTUS | 78.31±18.25 | 84.80±1.03 | 84.62±0.34 | 82.15±0.98 | 81.42±0.23 | 78.89±0.82 |
| PART QI:8/14 | TDS | +83.08±0.1 | +83.19±0.2 | +82.86±0.2 | +82.86±0.2 | +82.88±0.2 | 82.83±0.24 |
| | TDR | +84.68±0.8 | 84.65±0.68 | +82.64±0.2 | +82.63±0.2 | +82.64±0.2 | 82.63±0.20 |
| | kACTUS | 85.92±0.28 | 85.66±0.24 | 85.46±0.24 | 84.76±0.29 | 84.71±0.22 | 83.14±1.03 |
| PART QI:11/14 | TDS | 80.60±2.02 | 81.43±1.91 | +82.61±0.2 | +82.62±0.2 | +81.34±0.2 | 81.34±0.19 |
| | TDR | +82.68±0.2 | +82.62±0.2 | +82.63±0.2 | +82.60±0.2 | +82.63±0.2 | 81.43±0.30 |
| | kACTUS | 86.04±0.21 | 85.85±0.18 | 85.46±0.25 | 84.97±0.20 | 84.00±0.24 | 81.69±1.78 |
| PART QI:14/14 | TDS | +77.29±2.8 | +80.48±0.2 | +79.93±1.7 | +75.21±0.2 | +75.21±0.2 | 80.38±0.2 |
| | TDR | +77.46±2.2 | +77.37±0.8 | +78.51±3.1 | +77.24±1.6 | +75.21±0.2 | +75.21±0.2 |
| | kACTUS | 85.91±0.25 | 85.55±0.13 | 84.84±0.33 | 83.90±0.24 | 83.20±0.15 | 78.28±0.44 |

# Fig. 12

## TABLE 5
### COMPARING ACCURACY WITH SUPPRESSION METHODS

| Case | Alg. | k=5 | k=20 | k=50 | k=100 | k=500 | k=1000 |
|---|---|---|---|---|---|---|---|
| C4.5 QI:8/14 | TDS | +82.84±0.22 | +82.79±0.22 | +82.79±0.22 | +82.79±0.22 | +82.72±0.23 | 82.43±0.23 |
| | TDR | +85.29±0.37 | +84.71±0.23 | +84.66±0.23 | 84.65±0.23 | +82.54±0.20 | 82.53±0.21 |
| | kADET | +82.83±0.30 | +82.52±0.32 | +82.52±0.32 | +82.52±0.32 | +82.50±0.32 | 82.39±0.21 |
| | kACTUS | 86.01±0.19 | 85.74±0.28 | 85.31±0.27 | 84.62±0.27 | 84.61±0.26 | 83.00±1.05 |
| C4.5 QI:11/14 | TDS | +77.41±0.20 | +79.32±1.56 | +79.49±1.53 | +79.49±1.53 | +79.45±1.45 | +77.41±0.20 |
| | TDR | +82.26±0.41 | +82.17±0.37 | +82.08±0.31 | +81.63±0.26 | +77.41±0.20 | +77.41±0.20 |
| | kADET | 81.08±2.57 | +81.97±1.72 | 81.33±2.26 | 81.31±2.25 | 81.27±2.22 | +75.73±0.83 |
| | kACTUS | 86.01±0.20 | 85.75±0.22 | 85.47±0.23 | 84.79±0.24 | 84.08±0.23 | 80.95±1.43 |
| C4.5 QI:14/14 | TDS | +77.82±2.07 | +75.21±0.19 | +75.21±0.19 | +75.21±0.19 | +75.21±0.19 | +75.21±0.19 |
| | TDR | +78.16±2.63 | +80.06±0.50 | +79.89±0.32 | +79.44±0.25 | +75.21±0.19 | +75.21±0.19 |
| | kADET | +82.58±0.32 | +81.78±0.28 | +80.96±0.31 | +80.84±0.22 | +75.21±0.19 | 75.21±0.19 |
| | kACTUS | 85.88±0.21 | 85.48±0.18 | 84.89±0.23 | 84.25±0.24 | 82.43±0.19 | 79.27±1.42 |
| Naïve B. QI:8/14 | TDS | +80.64±0.95 | +80.41±0.61 | +80.41±0.61 | +80.41±0.61 | +80.45±0.14 | 77.97±1.83 |
| | TDR | +82.93±0.48 | +79.93±0.38 | +81.34±1.56 | +82.58±0.57 | +77.98±1.00 | 78.52±0.49 |
| | kACTUS | 85.45±0.15 | 85.37±0.23 | 85.11±0.24 | 84.83±0.41 | 83.10±0.75 | 85.45±0.15 |
| Naïve B. QI:11/14 | TDS | +73.04±0.24 | +76.63±2.92 | +76.88±2.71 | +76.88±2.71 | 79.19±1.69 | +73.36±0.26 |
| | TDR | +74.33±0.64 | +70.12±5.70 | 76.52±3.86 | 78.41±3.5 | +80.12±0.23 | +73.03±0.26 |
| | kACTUS | 84.79±0.42 | 84.54±0.56 | 83.59±1.19 | 83.59±1.19 | 77.41±0.16 | 76.66±0.42 |
| Naïve B. QI:14/14 | TDS | +77.40±2.75 | +74.86±1.09 | +74.86±1.09 | +74.86±1.09 | +75.18±0.22 | +75.21±0.19 |
| | TDR | 76.42±4.69 | +78.87±0.58 | +79.53±0.52 | +77.92±1.21 | +77.34±0.22 | +65.28±3.02 |
| | kACTUS | 85.79±0.76 | 86.01±0.52 | 85.64±0.36 | 84.84±0.29 | 83.01±0.22 | 79.74±0.62 |
| Logistics. QI:8/14 | TDS | +83.26±0.19 | +83.25±0.16 | +83.25±0.16 | +83.25±0.16 | +83.21±0.16 | 82.76±0.20 |
| | TDR | +83.81±0.90 | 84.14±0.65 | +84.12±0.66 | 84.13±0.67 | +82.79±0.22 | 82.78±0.21 |
| | kACTUS | 86.02±0.38 | 85.94±0.30 | 85.50±0.39 | 84.45±0.57 | 83.75±0.18 | 82.98±0.47 |
| Logistics. QI:11/14 | TDS | 76.36±0.21 | +79.41±1.70 | +79.56±1.58 | +79.56±1.58 | +79.52±1.58 | +77.37±0.20 |
| | TDR | 80.52±0.88 | +80.55±0.85 | +80.52±0.89 | +80.36±0.50 | +77.37±0.20 | +77.37±0.21 |
| | kACTUS | 80.53±15.56 | 85.54±0.53 | 85.24±0.39 | 83.83±1.02 | 82.80±0.28 | 80.51±0.80 |
| Logistics. QI:14/14 | TDS | 77.79±2.08 | +75.18±0.22 | +75.18±0.22 | +75.18±0.22 | +75.18±0.22 | +75.21±0.19 |
| | TDR | 76.91±1.97 | +78.06±1.06 | +78.00±1.08 | +77.89±0.75 | +75.21±0.19 | +75.21±0.19 |
| | kACTUS | 78.31±18.25 | 84.80±1.03 | 84.62±0.34 | 82.15±0.98 | 81.42±0.23 | 78.89±0.82 |
| PART QI:8/14 | TDS | +82.87±0.19 | +82.86±0.22 | +82.86±0.22 | +82.86±0.22 | +82.88±0.19 | 82.57±0.26 |
| | TDR | +84.07±0.82 | +84.70±0.29 | +84.69±0.29 | 84.69±0.27 | +82.63±0.17 | 82.62±0.17 |
| | kACTUS | 85.92±0.28 | 85.66±0.24 | 85.46±0.24 | 84.76±0.29 | 84.71±0.22 | 83.14±1.03 |
| PART QI:11/14 | TDS | +77.38±0.19 | +79.35±1.67 | +79.49±1.61 | +79.49±1.61 | +79.47±1.55 | +77.35±0.20 |
| | TDR | +80.17±1.10 | +80.57±1.10 | +80.77±1.31 | +80.77±1.21 | +77.35±0.20 | +77.37±0.20 |
| | kACTUS | 86.04±0.21 | 85.85±0.18 | 85.46±0.25 | 84.97±0.20 | 84.00±0.24 | 81.69±1.78 |
| PART QI:14/14 | TDS | +77.85±2.05 | +75.21±0.19 | +75.21±0.19 | +75.21±0.19 | +75.21±0.19 | +75.21±0.19 |
| | TDR | +76.97±1.89 | +78.06±1.06 | +78.00±1.08 | +77.54±0.66 | +75.21±0.19 | +75.21±0.19 |
| | kACTUS | 85.91±0.25 | 85.55±0.13 | 84.84±0.33 | 83.90±0.24 | 83.20±0.15 | 78.28±0.44 |

## Fig. 13

TABLE 4

COMPARING ACCURACY WITH A MULTI-DIMENSIONAL METHOD

| Case | Alg. | k=5 | k=20 | k=50 | k=100 | k=500 | k=1000 |
|---|---|---|---|---|---|---|---|
| C4.5 | kACTUS | 86.01±0.19 | 85.74±0.28 | 85.31±0.27 | 84.62±0.27 | 84.61±0.26 | 83.00±1.05 |
| QI:8/14 | Mondrian | +82.86±0.27 | +82.86±0.19 | +82.86±0.17 | +82.85±0.19 | +82.73±0.26 | -77.00±0.63 |
| C4.5 | kACTUS | 86.01±0.20 | 85.75±0.22 | 85.47±0.23 | 84.79±0.24 | 84.08±0.23 | 80.95±1.43 |
| QI:11/14 | Mondrian | +83.09±0.13 | 82.46±1.73 | 80.93±2.94 | +79.48±2.76 | 79.19±2.95 | -77.20±0.62 |
| C4.5 | kACTUS | 85.88±0.21 | 85.48±0.18 | 84.89±0.23 | 84.25±0.24 | 82.43±0.19 | 79.27±1.42 |
| QI:14/14 | Mondrian | +82.17±0.21 | +82.15±0.18 | -81.31±0.45 | +81.11±0.16 | -75.18±0.22 | -75.21±0.19 |
| Naïve B. | kACTUS | 85.45±0.15 | 85.37±0.23 | 85.11±0.24 | 84.83±0.41 | 83.10±0.75 | 85.45±0.15 |
| QI:8/14 | Mondrian | +77.29±0.98 | -78.00±0.34 | -77.98±0.40 | +77.66±0.40 | -77.08±1.51 | -76.13±0.26 |
| Naïve B. | kACTUS | 84.79±0.42 | 84.54±0.56 | 83.59±1.19 | 83.59±1.19 | 77.41±0.16 | 76.66±0.42 |
| QI:11/14 | Mondrian | +69.61±3.57 | 65.82±7.73 | +63.74±6.36 | +63.19±4.94 | 70.15±6.27 | 59.06±9.82 |
| Naïve B. | kACTUS | 85.79±0.76 | 86.01±0.52 | 85.64±0.36 | 84.84±0.29 | 83.01±0.22 | 79.74±0.62 |
| QI:14/14 | Mondrian | +44.15±2.80 | -47.49±2.76 | +47.70±1.63 | +47.12±4.05 | +53.08±5.54 | -39.37±15.28 |
| Logistics. | kACTUS | 86.02±0.38 | 85.94±0.30 | 85.50±0.39 | 84.45±0.57 | 83.75±0.18 | 82.98±0.47 |
| QI:8/14 | Mondrian | +83.69±0.23 | -83.68±0.23 | -83.59±0.19 | 83.30±0.28 | +82.82±0.29 | 82.68±0.18 |
| Logistics. | kACTUS | 80.53±15.56 | 85.54±0.53 | 85.24±0.39 | 83.83±1.02 | 82.80±0.28 | 80.51±0.80 |
| QI:11/14 | Mondrian | 82.16±1.22 | 82.30±1.74 | +81.92±1.07 | +81.20±2.14 | -79.82±2.47 | -77.38±0.19 |
| Logistics. | kACTUS | 78.31±18.25 | 84.80±1.03 | 84.62±0.34 | 82.15±0.98 | 81.42±0.23 | 78.89±0.82 |
| QI:14/14 | Mondrian | 80.29±2.03 | -78.18±2.17 | +75.15±2.45 | +73.88±2.07 | 73.54±4.25 | -75.21±0.19 |
| PART | kACTUS | 85.92±0.28 | 85.66±0.24 | 85.46±0.24 | 84.76±0.29 | 84.71±0.22 | 83.14±1.03 |
| QI:8/14 | Mondrian | +82.29±0.84 | -82.53±0.59 | +82.52±0.46 | +82.67±0.41 | -82.56±0.48 | 82.83±0.24 |
| PART | kACTUS | 86.04±0.21 | 85.85±0.18 | 85.46±0.25 | 84.97±0.20 | 84.00±0.24 | 81.69±1.78 |
| QI:11/14 | Mondrian | +81.60±1.57 | -81.68±1.52 | -81.32±0.83 | -79.70±1.32 | 78.20±4.00 | +75.39±2.91 |
| PART | kACTUS | 85.91±0.25 | 85.55±0.13 | 84.84±0.33 | 83.90±0.24 | 83.20±0.15 | 78.28±0.44 |
| QI:14/14 | Mondrian | +81.64±0.64 | -80.81±0.64 | -80.96±0.89 | -80.34±0.88 | +77.21±0.19 | -75.21±0.19 |

Fig. 14

TABLE 6
SCALABILITY ANALYSIS RESULTS

| Scalability factor | C4.5 training time (sec) | k-anonymity time (sec) | Dataset size |
|---|---|---|---|
| 5 | 6.88 | 44.32 | 226110 |
| 10 | 15.57 | 99.16 | 452220 |
| 15 | 28.48 | 192.82 | 678330 |
| 20 | 41.23 | 247.94 | 904440 |
| 25 | 62.47 | 409.32 | 1130550 |
| 30 | 69.43 | 483.01 | 1356660 |

# Fig. 15

Fig. 16

171

Receive non anonymous dataset and automatically inducing a Classification Tree

172

calculating instance size for each leaf in the Classification Tree (CT)

173

For each internal CT node Check whether its instance size complies with k

Yes

move to an accumulating buffer for generating a k-anonymous dataset

174

Yes

175

Check whether total number of instances associated with the non-complying leaves jointly comply with K

No

complement non-complying instances from the complying siblings to reach K

Yes

177

node is completely pruned

176

Check whether CT contains more nodes

178

No

179

utilize a data mining algorithm over the k-anonymous dataset

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. Kantarcioglu ; J. Jin ; C. Clifton.** When Do Data Mining Results Violate Privacy?. *Proceedings of the 2004 International Conference on Knowledge Discovery and Data Mining,* 2004, 599-604
- Negation Recognition in Medical Narrative Reports. **L. Rokach ; R. Romano ; O. Maimon.** Information Retrieval. Springer, 2008, vol. 11, 499-538
- Local Perspective of the Impact of the HIPAA Privacy Rule on Research. **M.S. Wolf ; C.L. Bennett.** Cancer-Philadelphia Then Hoboken. John Wiley & Sons, 2006, vol. 106, 474-479
- Generalizing Data to Provide Anonymity When Disclosing Information. **P. Samarati ; L. Sweeney.** Proceedings of the seventeenth ACM SIGACT-SIGMOD-SIGART symposium on Principles of Database Systems. ACM, 1998, 188
- k-anonymity: A Model for Protecting Privacy. **L. Sweeney.** International Journal on Uncertainty, Fuzziness and Knowledge-based Systems. World Scientific Syngapore, 2002, vol. 10, 557-570
- Achieving k-Anonymity Privacy Protection Using Generalization and Suppression. **L. Sweeney.** International Journal on Uncertainty, Fuzziness and Knowledge-based Systems. World Scientific Syngapore, 2002, vol. 10, 571-588
- **B.C.M. Fung ; K. Wang ; P.S. Yu.** Top-Down Specialization for Information and Privacy Preservation. *Proceedings of the 21st IEEE International Conference on Data Engineering,* April 2005, 205-216
- **K. Wang ; P.S. Yu ; and S. Chakraborty.** Bottom-Up Generalization: A Data Mining Solution to Privacy Protection. *Proceedings of the fourth IEEE International Conference on Data Mining,* 2004, 205-216
- Optimal K-Anonymity with Flexible Generalization Schemes through Bottom-Up Searching. **L. Tiancheng ; I. Ninghui.** Proceedings of the Sixth IEEE International Conference on Data Mining-Workshops. IEEE Computer Society Washington, 2006, 518-523
- Transforming Data to Satisfy Privacy Constraints. **S.V. Iyengar.** Proceedings of the eighth ACM SIGKDD International Conference on Knowledge Discovery and Data Mining. ACM Press New York, 2002, 279-288

- Anonymizing Classification Data for Privacy Preservation. **B.C.M. Fung ; K. Wang ; P.S. Yu.** IEEE Transactions on Knowledge and Data Engineering. IEEE Computer Society, 2007, vol. 19, 711-725
- Incognito: Efficient Full Domain k-Anonymity. **K. LeFevre ; D.J. DeWitt ; R. Ramakrishnan.** Proceedings of the 2005 ACM SIGMOD international conference on Management of data. ACM New York, NY, USA, 2005, 49-60
- Providing k-Anonymity in Data Mining. **A. Friedman ; R. Wolff ; A. Schuster.** The International Journal on Very Large Data Bases. Springer-Verlag New York, Inc, vol. 17, 789-804
- Wrappers for Feature Subset Selection. **R. Kohavi ; G.H. John.** Artificial Intelligence. Elsevier, 1997, vol. 97, 273-324
- State-of-the-Art in Privacy Preserving Data Mining. **V.S. Verykios ; E. Bertino ; I.N. Fovino ; L.P. Provenza ; Y. Saygin ; Y. Theodoridis.** ACM SIGMOD Record. ACM New York, 2004, vol. 33, 50-57
- Privacy Preserving Data Mining. **A. Agrawal ; R. Srikant.** ACM SIGMOD Record. ACM New York, 2000, vol. 29, 439-450
- k-TTP: A New Privacy Model for Large-Scale Distributed Environments. **B. Gilburd ; A. Schuster ; R. Wolff.** Proceedings of the tenth ACM SIGKDD International Conference on Knowledge Discovery and Data Mining. ACM New York, 563-568
- Privacy-Preserving Classification of Customer Data without Loss of Accuracy. **Z. Yang ; S. Zhong ; R.N. Wright.** Proceedings of the 5th International Conference on Data Mining. Society for Industrial Mathematics, 2005
- Data Privacy through Optimal k-Anonymization. **J. Roberto ; Jr. Bayardo ; A. Rakesh.** Proceedings of the International Conference on Data Engineering. IEEE Computer Society Press, 2005, vol. 21, 217-228
- Practical Privacy: The SuLQ framework. **A. Blum ; C. Dwork ; F. McSherry ; K. Nissim.** Proceedings of the twenty-fourth ACM SIGMOD-SIGACT SIGART Symposium on Principles of Database Systems. ACM New York, June 2005, 128-138
- **S. Chawla ; C. Dwork ; F. McSherry ; A. Smith ; H. Wee.** Toward Privacy in Public Databases. *Theory of Cryptography Conference,* 2005, 363-385

- **K. Wang ; B.C.M. Fung ; P.S. Yu.** Template-Based Privacy Preservation in Classification Problems. *The Fifth IEEE International Conference on Data Mining,* 2005, 466-473
- Privacy and Ownership Preserving of Outsourced Medical Data. **E.Bertino ; B.C. Ooi ; Y. Yang ; R.H. Deng.** Proceedings of the International Conference on Data Engineering. IEEE Computer Society Press, 2005, vol. 21, 521-532
- **G. Aggarwal ; A. Feder ; K. Kenthapadi ; R. Motwani ; R. Panigrahy ; D. Thomas ; A. Zhu.** Approximation Algorithms for k-Anonymity. *Journal of Privacy Technology (JOPT),* 2005
- On the Complexity of Optimal k-Anonymity. **A. Meyerson ; R. Williams.** Proceedings of the twenty-third ACM SIGMOD-SIGACT-SIGART .Symposium on Principles of Database Systems. ACM New York, 2004, 223-228
- Protecting Respondents' Identities in Microdata Release. **P. Samarati.** IEEE Transactions on Knowledge and Data Engineering. IEEE Computer Society, 2001, vol. 13, 1010-1027
- **K. LeFevre ; D.J. DeWitt ; R. Ramakrishnan ; Mondrian Multidimensional k-Anonymity.** *Proceedings of the 22nd International Conference on Data Engineering,* April 2006, 25
- Workload-Aware Anonymization. **K. LeFevre ; D.J. DeWitt ; R. Ramakrishnan.** Proceedings of the 12th ACM SIGKDD International Conference on Knowledge Discovery and Data Mining. ACM New York, 2006, 277-286
- Datafly: A System for Providing Anonymity in Medical Data. **L. Sweeney.** Proceedings of the IFIP TC11 WG11.3 Eleventh International Conference on Database Securty XI: Status and Prospects. Chapman & Hall, Ltd, 1997, 356-381
- Towards Tractable Algebras for Bags. **S. Grumbach ; T. Milo.** Journal of Computer and System Sciences. Elsevier, 1996, vol. 52, 570-588
- **Y. Du ; T. Xia ; Y. Tao ; D. Zhang ; F. Zhu.** On Multidimensional k-Anonymity with Local Recoding Generalization. *Proceedings of International Conference on Data Engineering (ICDE),* 2007, 1422-1424
- Pessimistic Cost-Sensitive Active Learning of Decision Trees. **L. Rokach ; L. Naamani ; A. Shmilovici.** Data Mining and Knowledge Discovery. Springer, 2008, vol. 17, 283-316
- C4.5: Programs for Machine Learning. **J.R. Quinlan.** Morgan Kaufmann. 1993
- Combined 5x2 cv F Test for Comparing Supervised Classification Learning Classifiers. **E. Alpaydin.** Neural Computation. MIT Press, 1999, vol. 11, 1885-1892
- **A. Asuncion ; D.J. Newman.** UCI Machine Leaning Repository. School of Information and Computer Science, 2007
- Generating Accurate Rule Sets Without Global Optimization. **E. Frank ; I.H. Witten.** Proceedings of the 15th International Conference on Machine Learning. Morgan Kaufmann, 1998, 144-151
- **I.H. Witten ; E. Frank.** Data Mining: Practical Machine Learning Tools. Morgan Kaufmann, 2005
- Statistical Comparisons of Classifiers over Multiple Data Sets. **J. Demsar.** Journal of Machine Learning Research. MIT Press Cambridge, 2006, vol. 7, 1-30
- Genetic Algorithm-Based Feature Set Partitioning for Classification Problems. **L. Rokach.** Pattern Recognition. Elsevier, 2008, vol. 41, 1693-1717